# EUROPEAN PATENT SPECIFICATION

(11) **EP 4 323 898 B1**
(45) Date of publication and mention of the grant of the patent: **26.02.2025**
(21) Application number: 22717445.5
(22) Date of filing: 13.04.2022
(51) Int. Cl.: G06F 21/33, G06F 21/60, H04L 9/32, H04L 9/40

(54) **COMPUTER-IMPLEMENTED METHODS AND SYSTEMS FOR ESTABLISHING AND/OR CONTROLLING NETWORK CONNECTIVITY**
COMPUTERIMPLEMENTIERTE VERFAHREN UND SYSTEME ZUR HERSTELLUNG UND/ODER STEUERUNG VON NETZWERKKONNEKTIVITÄT
PROCÉDÉS ET SYSTÈMES IMPLÉMENTÉS PAR ORDINATEUR POUR ÉTABLIR ET/OU COMMANDER UNE CONNECTIVITÉ DE RÉSEAU

(30) Priority: 14.04.2021 GB 202105297
(43) Date of publication of application: 21.02.2024
(73) Proprietor: ENCLAVE NETWORKS LIMITED, Newport NP18 2HJ (GB)
(72) Inventor: EVANS, Alistair, Cwmbran Gwent NP44 3AW (GB); BARRY, Marc, Cwmbran Gwent NP44 3AW (GB)
(74) Representative: Jones, Cerian
(86) International application number: PCT/IB2022/053460
(87) International publication number: WO 2022/219551

(56) References cited:
- GB-A- 2 543 072
- US-B1- 10 057 243
- "Chapter 13: Key Management Techniques ED - Menezes A J; Van Oorschot P C; Vanstone S A", 1 October 1996 (1996-10-01), XP001525013, ISBN: 978-0-8493-8523-0, Retrieved from the Internet <URL:http://www.cacr.math.uwaterloo.ca/hac/> [retrieved on 20211125]

## Description

### TECHNICAL FIELD

This invention relates generally to computer networks and associated methods, and more particularly to solutions for building networked environments, and enabling systems and devices to communicate with one another in a secure manner. Embodiments also provide tools for efficient and secure creation, configuration, reconfiguration and/or maintenance of computer-based networks and systems, and for providing capabilities and functionalities which may have been provided by conventional VPN servers. Embodiments of the disclosure are particularly suited for establishing a secure tunnel between computing resources so that subsequent communication and connectivity between those networked resources is facilitated without:
a) compromising network security due to an adverse impact arising from a requirement for administrators to relax firewall rules; or
b) increasing resource requirements due to the deployment of additional hardware or software-based gateway devices; or
c) human intervention required to reconfigure networking and underlying network equipment for the creation of private connectivity between discrete locations.

### BACKGROUND

The need for connectivity between computing systems for communication and data sharing is commonplace in today's world. Many arrangements use public key cryptography as a building block for the establishment of such connections. However, the use of public key cryptography and traditional approaches to network connectivity present a common set of logistical problems, including Identity validation, public key distribution, public key authenticity and peer discovery and peer connectivity. In situations involving mutually known and co-operating entities, the technical challenge becomes how to perform the exchange of public keys. A trusted third party e.g. Certificate Authority (CA) is not necessarily required for the participants to gain confidence of each other's identities during the public key exchange if they already share a real world relationship because the role of a CA is to provide identity assurance between entities that do not share a real-world relationship. However, if the CA is removed from the process then the parties do not benefit from the ability to utilise the easier-to-handle name-to-key mapping that is conventionally provided by the CA (e.g. a CA issued certificate maps the name example.com to a 2048 bit public key). Such parties wishing to connect without a CA face challenges relating to public key exchange, network discovery and system reachability.

A solution to such technical challenges is disclosed in WO 2017/060675 which teaches a public key infrastructure and method of distribution for performing human/out of band exchange of names between co-operating, mutually known entities that wish to establish network connectivity between their respective systems. However, while the solution disclosed in WO 2017/060675 facilitates the construction of a communication channel between the two parties, it does not address any needs or challenges arising between them after the connection has been established. Essentially, it teaches a method for building a channel but does not address technical issues relating to the post-construction use of that channel. WO 2017/060675 also does not provide a mechanism for the construction of a channel without the use of human intervention but instead teaches a process of manual, out of band exchange of short identity numbers (SINs) between all parties. Such an approach becomes increasingly onerous as group size increases. Furthermore, it does not provide mechanisms for controlling, managing or scaling to large-scale deployments of that technology. Moreover, WO 2017/060675 does not provide a mechanism for machine-to-machine construction of the secure channel between the entities and requires human/out-of-band intervention which is time consuming and potentially error prone. There is no facility for the provision of a virtual network adapter/interface at each end of the communication tunnel, which therefore reduces the functionality available to end users and network managers alike. Therefore, the prior art does not provide a complete solution which addresses the technical challenge of how to specify and establish potentially complex connectivity between networks of authorised devices belonging to respective parties and doing so without a controlling entity playing a central role between the parties. Instead, it teaches a method of self-managing connectivity between distributed groups of cooperating parties with pre-existing, real-world relationships.

Thus, it is desirable to provide a solution which: address at least these challenges and more; enables reliable, simple and efficient public-key distribution between parties; removes the requirement on administrators in a network to a) manage intent and b) require a pre-existing real-world relationship to exchange intent to connect; and enables network connectivity to be constructed, maintained and utilised in an efficient, quick, secure and simple manner.

### TERMINOLOGY

The following terms will be used hereafter in this document.
- Account
   a logical boundary at the Platform which isolates one group of users from any other groups of users also registered to the Platform
- Account Owner
   the party or individual within an organisation, or an individual, who creates an account on the Platform in accordance with an embodiment of the disclosure. The Account Owner holds the highest level of account privilege for a given Organisation's account on the Platform
- Agent
   the software which an Administrator (Carol) may download and installs on a System to enable that System to use the Platform
- Alice
   a human end-user of a System, who uses a System we will call System1 and which has been enrolled to a specific Organisation's account at the Platform;
- Bob
   as per Alice; another human end-user of a different system, who uses a System we will call System2
- Carol
   A registered user who holds the Account Owner and Platform Administrator roles for an account at the Platform; Carol is considered to have the highest level of permissions for an individual account on the Platform and has ultimate responsibility for the management and configuration of the Platform
- Connection Candidate
   a logical network address representing the network location of a Peer that can be used to enable two Systems to connect; this may be a tuple composed of reachability information such as an IPv4 or IPv6 address, a port number, a protocol (UDP or TCP) and/or a priority. For example: udp/127.0.0.1:45231 priority 64
- Connection Negotiation
   The process of attempting to build a network Tunnel between two Systems
- Cooperating Entities
   an entity can be an individual, an organisation e.g. a business or part of a business, or some other type of entity such as an end-user or local computer operator. In embodiments where no pre-existing Policy or Tag has been specified for a specified enrolled System, entities need to indicate a mutual intent to connect their respective enrolled systems. However, in embodiments where Policies and Tags have been established in respect of a given system, no further intent or cooperation needs to be explicitly established and cooperating entities are not required to facilitate the connectivity, the provision of Tags and Policies are deemed to provide or represent the necessary indication of intent to connect; a connecting system will be able to connect to peers in accordance with the Policies and Tags that have been specified and assigned to it;
   Entities may be entirely distinct or separate from each other or may be associated with or related to one another in some way e.g. internal to the same corporate or organisational entity or owner
- Certificate
   As known in the art; may also be known as a public key certificate or digital certificate;
   issued by a certificate authority (CA) which, in a preferred embodiment, is a component of the Platform.
- Certificate Signing Request (CSR) As known in the art; In accordance with some embodiments, the CSR may be prepared and sent by the Agent with the addition of its Enrolment Key over a secure channel to the Platform (i.e. via TLS))
- Certificate Name (CN)
   as known in the art; the Common or Distinguished name on a Certificate. Used in accordance with the disclosure as a non-secret identifier, chosen at random (arbitrarily) by a CA to be used as a common name on a digital certificate. May also be referred to as an "arbitrary identifier". Each common name is unique to a given public key. In some embodiments, but not all, the value is designed so as to be short in length (compared to a full public key) and is digitally signed into a certificate with a System's public key
- Compliant Member
   Refers to a System which is in alignment with the Tag Membership Requirements attached to a Tag of which a given System is a Member. When a System is compliant, Policy is applied based on which Tags the System is a member of
- Computed Policy
   The output of agent state combined with policy defined on the portal
- Discovery Service (DS)
   A Platform component in accordance with the disclosure and which may facilitate the aims of "service discovery"; the DS component of the disclosure provides directory services, registration services and introduction services to enrolled systems. The DS also pushes Policy and provides Connection Candidates to enrolled systems as explained in more detail below.
- Enrolment Key
   A unique value that is a secret and used Enrol a new System to the Platform; the Enrolment Key is generated by the Platform and used for the purpose of enrolling a System to a specific Account on the Platform. An Enrolling System provides the secret Enrolment Key to the Platform during Enrolment via the Agent. Access to the Enrolment Key should be restricted to authorised parties only
- Enrolled System
   A System which has an Agent installed and has successfully consumed an Enrolment Key recognised as valid by the Platform i.e. an Enrolment Key has been successfully presented by an Agent and accepted by the Platform which has in turn issued the System with a Certificate; Enrol (verb) is the act of applying an Enrolment Key to a System
- Identity
   The Certificate Name which uniquely identifies a given System; in some embodiments, "identity" may refer to the combination of a Private Key with a Certificate.
- Managed System
   when one or more Tags are attached to a System enrolled to the Platform, the Agent running on that System becomes centrally managed (i.e. by an embodiment of the disclosure) by the Platform, and Policy and configuration is given (pushed from) the Platform to the Agent. When the Agent software is pushed Policy by the Platform in managed mode, it must abide by the Policy;
- Non-Compliant Member
   Refers to a System which is not in alignment with the Tag Membership Requirements attached to a Tag of which a given System is a Member. When a System is non-compliant, any connectivity which would normally be inferred through its Tag membership is not applied
- Unmanaged System
   when a System enrolled to the Platform has no Tags attached to it, that system is untagged meaning that the Agent software running on that System is controlled by local users of that System who may elect to change Agent's configuration and behaviour or control requests to connect with other systems.
- Organisation
   The entity which owns or controls a set of systems arranged for connection to each other via an embodiment of the disclosure; an organisation can have multiple users who are authorised for administration roles, and each user can belong to multiple organisations; example of organisations could include, for example, a corporate or non-corporate body or a department within such a body
- Peer
   From the perspective of an Enrolled System, a Peer is any other Enrolled System running an Agent in accordance with an embodiment of the disclosure
- Platform
   can also be referred to as the "SaaS service" or simply "the service"; an amorphous group of services provided by embodiments of the disclosure and which Agents connect to in order to access the virtual private networking services provided by the Platform
- Platform Administrator
   may also be the Account Owner, the individual or party that logs into the Portal to generate Enrolment Keys, approve the Enrolment of new Systems, and define Tags and Policy; an Account may be controlled by one or more Platform Administrators; in this document we call the Platform Administrator "Carol" for ease of reference
- Policy
   Policies are described in more detail below but can be described here as rules or conditions relating to traffic flow for a particular Enrolled System to other Enrolled Systems; Policies are defined by the Platform's Account Owner(s) and/or Platform Administrator(s) or other appropriately designated roles i.e. Carol
- Portal
   The (potentially web-based) interface which Carol uses to administer her account and configure/specify the services that will be provided by the Platform;
- System
   herein, we use the term system to mean resource, including any type of computer-based resource which may be connected to another such resource, and should be interpreted as potentially comprising a single device or multiple devices. The System is in possession of a Certificate which corresponds to its Private Key(s). A system can be an:
   ∘ Online system: An Enrolled System which is connected to the Platform; or
   ∘ Offline system: An Enrolled System which is not currently connected to the Platform
   Systems may be members of Tags. Systems may be compliant or non-compliant members of a Tag based on a Tag's attached Tag Membership Requirements
- Tag
   Tags are described in more detail below but are briefly described here as criteria which govern when a particular Policy does or does not apply to a particular System. Tags are, therefore, related to Policies and further refine the level of control that the Policy maker can exert over the system. Tags may be attached to Policy
- Tag Membership Requirement
   Tag Membership Requirements are attached to (associated with) Tags
- Traffic Flow
   The movement of packets and data frames across the overlay network between connected Peers using the Tunnels constructed by the platform between Systems
- Tunnel
   a Tunnel is an encrypted virtual network connection established between two Systems facilitated by the Platform and Agent software which may (or may not) be actively sending traffic to one another across the established Tunnel

### SUMMARY

Illustrative embodiments of the present disclosure are provided herein in the description and appended claims. The disclosure provides mechanisms for connecting systems to one another for subsequent communication and data sharing. Upon connection, the systems form a Virtual Private Network (VPN) without a centralised component to acting as a traffic concentrator or typical VPN server and gateway as known in the art. Each system adds a virtual network interface (VIF) to their respective side of the connection and assigns itself or is assigned a virtual IP address. This enables the establishment of a directly connected, end-to-end encrypted connection, providing a virtual overlay network that is common to, and shared by, each system. As a result, the secure, direct connection is established without the traditional need for VPN server in the middle.

Preferably, a Platform is provided by means of a SaaS service (Software as a Service) which facilitates introductions and connectivity between the systems. The systems may or may not belong to the same organisation. Preferably, the Platform comprises one or more of: a Discovery Service (DS), an interface resource which serves as a portal for account management and configuration of settings, a Certificate Authority (CA) and/or a plurality of Relay Services which may function substantially as the equivalent of TURN servers.

The Platform provides a mechanism for controlling and categorising systems via the use of "Tags" and "Policies", which are described in more detail below. In brief, though: a "Policy" may be applied to one or more systems to specify traffic flow conditions which apply to them. For example, a condition may be "network traffic may only flow between specified systems on Monday between 10am and 11am GMT". A Policy may be composed of one or more Tags on the "Sender" and also the "Receiver" side of the Policy. The Tags may govern the direction in which traffic may flow (sender toward receiver). Tags may contain Tag Membership Requirements such as, for example, "is antivirus protection enabled?". Preferably, only pre-authorised Account Owner(s), Platform Administrator(s) or other designated/delegated roles are able to define, specify or edit Policy conditions or Tags and Tag Membership Requirements.

An illustrative use-case scenario in accordance with a preferred embodiment is provided as follows. Carol registers with the Platform to create an account. Registration may be performed via an interface provided via any suitable means such as, for example, a web-based portal. A software application (i.e. "the Agent") is then installed on each of the system(s) that she wants to enrol to the Platform. During or after installation, Carol obtains, from the Platform, one or more Enrolment Keys for her System(s) with the Agent installed. The Enrolment Keys provide a mechanism for enrolling each System into Carol's account at the Platform. The same Enrolment Key can be used on many systems, depending on how Carol chooses to configure the properties or attributes associated with the Enrolment Key.

In order to facilitate subsequent authentication of identity and authorisation to connect, each Agent generates a cryptographic key and sends this along with its Enrolment Key to the CA at the Platform in the form of a Certificate Signing Request (CSR). In contrast to traditional CAs, the CA of a preferred embodiment is "private" to the Platform in the sense that it is not, as per the prior art, provided by the Operating System (OS) supplier and pre-installed on the System at the OS level.

The CA generates a non-secret identifier, chosen at random (i.e. arbitrarily), that can be subsequently used as a Certificate Name on a digital certificate that can be sent back to a requesting party. The certificate name is similar to a Common Name as known in the prior art. Each Certificate Name is unique to a given public key and is stored in the CA's records in association with the Public Key. In some embodiments, but not all, the Certificate Name provides a more human-friendly short name for authentication and authorisation purposes compared to a cryptographic key.

Network reachability information is stored at the Platform for each system that has been enrolled. This reachability information, e.g. IP addresses and port number, provides a way for other Systems to locate, on the network, the System that a given Agent is installed on, and is refreshed each time the Agent (re)connects to the Platform (usually via the public Internet). Therefore, the network reachability information enables Agents installed on enrolled systems to locate and connect with each other following introduction via the Platform's Discovery Service.

After enrolment, if an enrolled system has been assigned Tags by Carol, the end-user (operator) of that system (i.e. Alice/Bob) cannot assume local control of that Agent on the System in respect of any connectivity the Agent may attempt to establish. Instead, the Agent is configured by Policy pushed from the Platform. If, however, the enrolled System is not tagged at the Platform, Alice may freely configure the Agent software to request a connection to other Enrolled Systems. However, the intent to connect must be reflected mutually i.e. reciprocated by the System to which Alice has attempted to connect. It is worth noting that the local user, Alice/Bob, may retain some control of the Agent on their System, although connectivity to other peers becomes governed and enforced by Policy as applied by Carol at the Platform (e.g. the ability to disable a connection established by Policy, or to stop and start the Agent software).

Thus, in a preferred embodiment, once a System has enrolled by requesting a Certificate from the CA in a single transaction which includes their Enrolment Key, its Agent opens a connection to the Discovery Service which thereafter acts as the "command and control" channel (which may also be referred to as a "signalling channel"). From one perspective, a System may be thought of as transitioning to being an "Enrolled Agent" after Certificate issuance.

When a connection attempt is initiated, the DS checks whether the System identified by the provided Certificate name is a managed or unmanaged one. It is Managed if one or more Tags are associated with it in the Organisation's Account, and unmanaged otherwise. If it is managed, the DS makes the necessary introductions to the other Enrolled Systems specified in the Policies that Carol has defined in the Platform by providing the relevant reachability information to all concerned Systems. The Systems then attempt to connect to one another. Techniques such as coordinated UDP/TCP hole punching (e.g. https://arxiv.org/abs/cs/0603074 and https://arxiv.org/pdf/cs/0603074.pdf) can be utilised for the purpose of establishing the network tunnel between the Agents in such a way as to avoid requiring them to open firewall ports or allow ingress traffic from the Internet to establish the a network connection.

An unencrypted network connection is established and is used as a communication medium over which the connecting systems may share their digital certificates, perform a key exchange handshake and agree a symmetric encryption key. The encryption key can then be used to provide end-to-end encryption of subsequent communication between the connected systems.

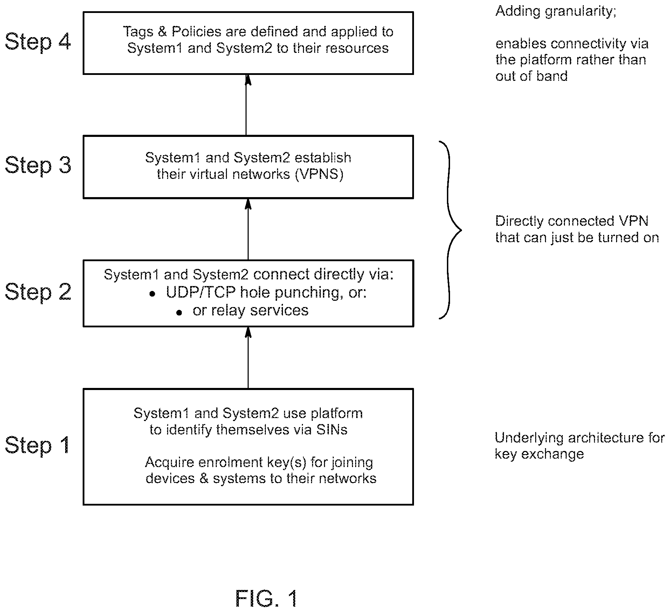

For example, suppose that System1 is governed by a Policy that mandates that it should be connected to System2. System1 and System2 both have respective Agents installed on them so they can be managed by the Platform. Typical steps may be:
1. System1's Agent connects to the Platform and sends information about its local state to the DS. This can include any information related to the system's state, configuration or arrangement of including, for example, security related information (e.g. antivirus is installed and running, updates have been applied etc.) The state information is an input to a pre-defined set of rules created by Carol. The state information is used by the DS to compute an appropriate Policy in accordance with Carole's pre-defined rules. In this way, the invention provides a dynamic, just-in-time System management solution which takes account of current operational factors and state relevant to the connecting system
2. The DS sends the Computed Policy to the Agent on System1 and also to the Agents on any other systems which require an updated Policy push so as inform them that they should connect to one another. Therefore, the Agents on Systems 1 and 2 each receive a respective Policy push from the DS to tell them to connect to the other. Note that in our example, for simplicity, we refer to only one Computed Policy but in practice more than one Policy may be specified by Carol for a given system and computed by the DS.
3. Each system parses the Policy it has received from the DS. As in our example System1's received Policy stipulates that it should connect to System2 and vice versa, System1 and System2 both request an introduction via the DS signalling channel (Figure 1, 9). They do this by each taking out a "subscription" which requests that the DS makes an introduction to the other system when mutual intent has been expressed by both sides via a mutual subscription at the DS. The systems may (or may not) receive an acknowledgement from the DS.
4. The DS validates the mutual subscription against Policy, identity and context, and provides Connection Candidates to each System for one or more of the requested introductions
5. The Agents on Systems1 and Systems2 both attempt to connect directly to the candidates that they have received by attempting to establish a direct TCP or UDP connection to each received candidate simultaneously.
6. Once a bi-directional network communication channel is established between the two Systems, each Agent sends the other a copy of its Certificate which begins the Key Exchange handshake; they validate each other's certificates, prove knowledge of their Certificate's private key and agree ephemeral encryption keys for the session;
   in more detail this involves:
   a. The receiving Agent checks to see if it was expecting the certificate sent by its connected Peer (either because Policy indicated it should in managed mode, or because Alice/Bob configured the Agent to expect it in unmanaged mode).
   b. As part of the Key Exchange handshake, the Agent receiving a Certificate will challenge the sender to prove knowledge of their associated private key by signing a randomly generated challenge value.
   c. The signed challenge is received and verified. As part of this process an ephemeral key exchange is performed using a new set of "session" keys
   d. Both Agents arrive at a common shared secret and are able to use knowledge of that shared secret to begin encrypting subsequent messages they exchange with one another. Thus, the Platform does not perform a Certificate exchange on behalf of the two systems. Instead, the Certificate exchange is performed directly between the connected systems themselves.
7. System1 and System2 switch to encrypted communication
8. Each initializes their local virtual network interface (as described in more detail below)
9. They exchange Virtual IP address information or the Platform policy push instructs each System which Virtual IP address to assign to its local virtual network interface the virtual IP addresses that are exchanged are additional IP addresses which the Platform adds to each System. The Policy may also contain enforcement information about which applications, ports and protocols can send traffic across the virtual network interface. The virtual address is either selected randomly during enrolment (if Carol has not defined any Policies for the system, i.e. it is in "unmanaged mode") or pushed as part of Policy when the system is in "managed mode"
10. Each Agent configures the local virtual network interface it created with the designated virtual IP address
11. Each System receives traffic from the local operating system which is forwarded by the Agent into the Tunnel, or via the encrypted Tunnel which is forwarded to the local operating system, as described in more detail below.

Thus, the disclosure provides methods, Systems, platforms and/or infrastructure which facilitates machine-to-machine public-key distribution between parties that are willing and able to verify each other's identities. It also provides a mechanism for building functionality into the connectivity achieved following the verification and establishment of a communication channel between the respective parties. It also provides systems and methods for creation, configuration, control and maintenance of virtual networks.

From another perspective, embodiments may be used to establish an encrypted Tunnel and provide virtual network interfaces at either end of the Tunnel so as to emulate a virtual private network (VPN) tunnel between connected Peers. Advantageously, this VPN may encapsulate data packets at layer 2 (using ethernet frames) or layer 3 (using ipv4/ipv6) without the need for a VPN server in the middle. Therefore, embodiments provide a significantly improved VPN architecture for connectivity establishment compared to the prior art. Various technical effects arise from this including, but not limited to, the requirement to provide effective protections against known exploits such as ARP cache poisoning. Solutions for addressing ARP cache poisoning are provided herein in accordance with a second aspect of the disclosure, substantially in the section entitled "FAKE ARP".

It should be noted that any feature described or claimed herein in relation to one aspect of the disclosure may also be present and incorporated into one or more other aspects of the disclosure. For example, a feature described or claimed in relation to a method of the invention may also be applicable to a system of the invention, and features presented in respect of one aspect of the disclosure are intended to be relevant to other aspect(s).

### LIST OF FIGURES

Aspects and embodiments of the present disclosure will now be described, by way of example only, and with reference to the accompany drawings, in which:
Figure 1 provides a simplified representation of high-level steps of an illustrative embodiment of the disclosure.
Figure 2 shows a simplified overview of an illustrative embodiment of the disclosure.
Figure 3 shows an overview of an enrolled System that configured for use in accordance with an embodiment of the disclosure.
Figure 4 shows the enrolled system of Figure 3 in more detail, including a "Fake ARP" component arranged to and configured to implement the techniques described in relation the "FAKE ARP" aspect of the disclosure.
Figures 5 and 6 show illustrative operations and functions of the Fake ARP component shown in Figure 4.

### DETAILED DESCRIPTION

In a preferred embodiment, and as shown in the accompanying figures, the disclosure provides a Platform (1) that includes some or all of the following components:
- A Discovery Service (DS)
   In preferred embodiment(s), the DS (4)is a software component which listens on a network for inbound connections, and upon receipt of an inbound connection will attempt to negotiate a connection with the arriving system in accordance with the disclosure provided herein; this may comprise the DS checking the identity of the inbound system against stored data e.g. a database, computing a Policy for that system and sending the Policy across the connection. The DS may also collect information from the arriving system and use it to inform Policy calculations.
   In accordance with embodiment(s) of the disclosure, the DS sends a set of server reflexive Connection Candidates to an Agent on System1 (6) for System2 (7) which enables that Agent to initiate a network connection to System2. A Connection Candidate is included which points to a Relay Service, alongside the Connection Candidates needed for connecting with System2. System1 and System2 each try to connect to the other. The set of Connection Candidates can be prioritised so that the order in which they are used for a connection attempt is specified by the priority. The lowest priority candidate in the set of Connection Candidates is the one which points to a relay server. In effect, therefore, this candidate serves as a "failback" to a relay if all other attempts to establish a direct connection is not possible for some reason.
- A Certificate Authority (CA)
   The CA (5) accepts / expects an Enrolment Key to be sent as part of a Certificate Signing Request (CSR) message received from an enrolling system; the CA is "private" in that it is a component of the Platform; the CA is operable to generate cryptographic key pairs, respond to CSRs and perform other processes typically associated with traditional, external CAs
- One or more relay servers (2) for connection of System1 and System2;
- A portal (3) which, among other functionalities, enables Carol to store, define and apply Tags and Policies to the Managed Systems associated with her account. Preferably, the portal is a combination of an API service and a front-end application which interacts with it and is web-based. It may be provided as a single page application and accompanying set of APIs.

Some embodiments may be implemented partially or wholly as a cloud-based system and/or as a SaaS service. However, other embodiments may not comprise such components or aspects. In some embodiments, Platform components may be implemented using dedicated hardware and software provided in one or more datacentres. The disclosure is not limited with regard to any particular implementation architecture or service delivery mechanism.

We now describe illustrative embodiments of the disclosure which, referring to the Figures, provide mechanisms that enable systems to establish network connectivity between them. Preferred embodiments enable a direct, end-to-end encrypted Tunnel between Systems 6, 7 via the public Internet with a virtual network interface on each system operating at either Layer 2 or 3 in a manner that is transparent to existing applications.

In our example embodiments, Alice and Bob are operators of systems System1 and System2 respectively. These systems are managed (Tagged) in compliance with Policies that have been set by the Account Owner/administrator (Carol) and, therefore, do not need to provide further evidence of intent to connect. The Policies that are specified by Carol are pushed by the Platform's DS to the respective Agents installed on the Systems and dictate what the Agents (13) are permitted or not permitted to do with respect to connectivity to Agents on other Systems.

### OVERVIEW

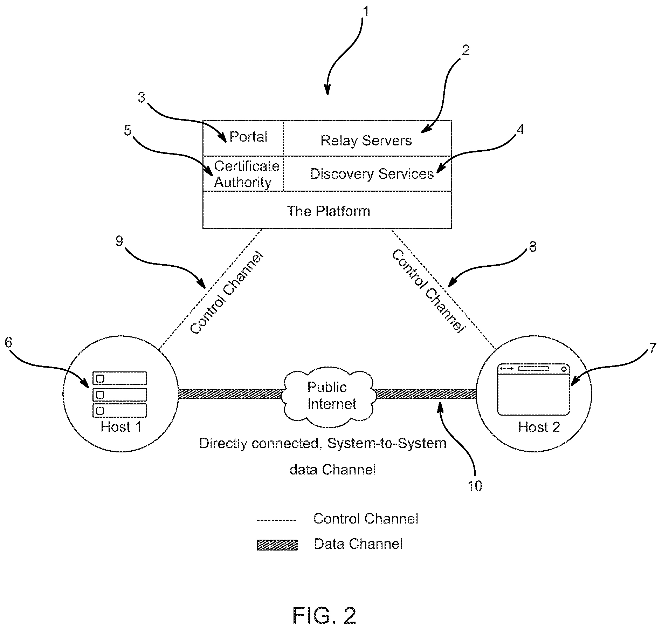

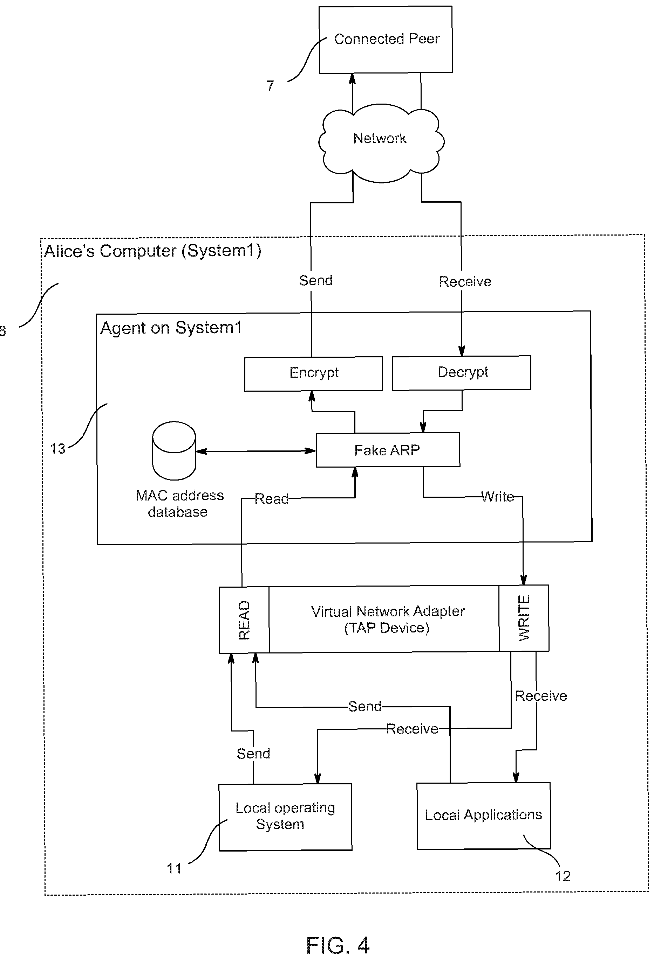

If an assigned Policy specifies that System1 should connect with System2, the Agent (13) on System1 (6) asks the DS (Figure 2, 4) for the necessary information for the required connection. Similarly, the Agent (13) on System2 (7) asks the DS for reachability information for System1 if the Policy associated with System2 specifies that the connection should be made, and the DS facilities the connection. In this way, the Agents on systems 1 and 2 mutually request an introduction to one another via the DS but they do this without the need for manual intervention or demonstration of cooperation/intent beyond that which is specified by their system's Policy or Policies.

In other words, the Agent on each System asks the DS to grant it a subscription to the other System by the other System's Certificate Common Name as given to it by a Policy push from the DS. When asked for a subscription, if the DS accepts the request, each Agent will be provided with a set of server reflexive Connection Candidates and a relay service Candidate that can be used to reach the other System on either the local network or Public Internet. Therefore, System1 requests a subscription to system2 at the DS. The DS may acknowledge the request. When System2 makes a similar subscription request to the DS for an introduction to System1, the DS is then - and only then - is in a position to provide both parties with the network reachability information (set of Connection Candidates) required to attempt a direct connection between the two Systems. Thus, unless both Agents submit subscription requests simultaneously to create symmetric intent, an asymmetry will arise between subscription requests wherein an interval will emerge between a subscription request and the DS providing Connection Candidates to both Agents. A subscription must be required by both Systems, the interval between subscription and introduction might be in the order of milliseconds, weeks, months or might never arise. So, in use, a very small or very large amount of time may pass between a subscription request being made and an introduction, depending on whether both systems are online at the same time and when they both requesting their respective subscriptions. If the Agent on either System1 or System2 temporarily disconnects from the DS, it will ask again for the same set of peer subscriptions when it comes back online and reconnects to the DS. Similarly, if the tunnel between System1 and System2 is lost but one of them does not notice a network connectivity interruption on its side, the system's Agent will proactively re-request a subscription to the disconnected Peer.

With further reference to the Figures, we now explain various aspects, features and components of the disclosure in more detail.

### Enrolment Key(s)

Carol enrols Systems 1 and 2 with the Platform. Following registration, enrolled Agents on the respective systems will be able to use the Platform's services to enable construction of Tunnels with other Agents on other Systems that have also been enrolled. During the enrolment process in step 1 of figure 1, Carol registers an account on the Platform and creates one or more unique Enrolment Keys, generated by the Platform 1. The Agents on Systems 1 and 2 subsequently receive respective Enrolment Keys from Carol via trustable pre-existing channels.

In some embodiments, an Enrolment Key might be limited or restricted to a specific number of uses. In other embodiments, an Enrolment Key might not have a limit in respect of the number of times it can be used. Moreover, an Enrolment Key might either be set to approve new enrolments automatically, or new enrolments may need to be manually approved by Carol before the enrolling system is accepted into the Platform.

Enrolment Keys are arbitrary, in that their values or format are not determined in respect of the System that they relate to and are generated by an algorithm that comprises a random or pseudo random key generation process. In an illustrative embodiment, an Enrolment Key may take the form:
Name: "All Staff Enrolment Key"
Key: "E7XBJ-AUKJQ-C2TXQ-6PTDY-85G7R"
Name: "Database Servers Enrolment Key"
Key: "JQ3RU-AH9YJ-23F28-VZTXP-TB84D"

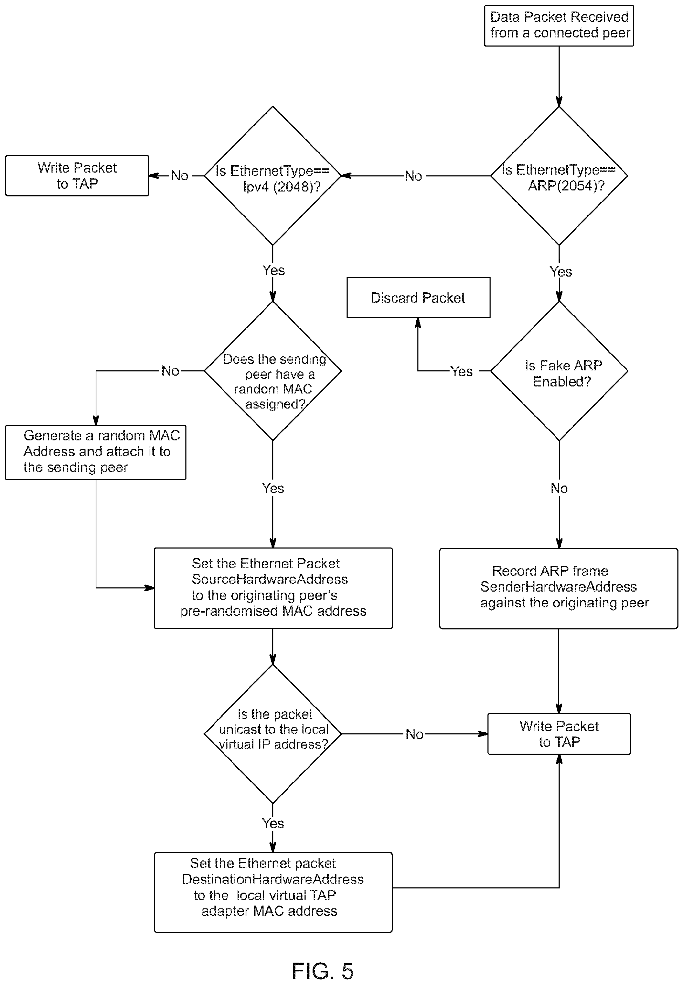

An Enrolment Key allows the Agent (13) on a newly added system to interact with the Platform's Certificate Authority (Figure 2, 5) but does not create or denote a relationship with the enrolling System. It is a secret, confidential value that is only disclosed to Carol or other Platform Administrators for Systems that are to be enrolled with the account at the Platform. Alternatively, an Enrolment Key may be passed from Carol to an end-user (Alice/Bob) so that the end-user can self-enrol although it should be noted that the Enrolment Key is a sensitive value and should be treated as a secret.

Therefore, from Carol's perspective, in order to enrol a particular System she performs the following steps:
1. Downloads the required software (Agent) from the Platform and installs it on the System
2. Provides an Enrolment Key to the Agent
3. Uses the Enrolment Key to enrol the system with the Platform; this process may comprise local private key generation, public key derivation and construction of a CSR which is sent to the CA in order to receive a certificate back - see below for details

The enrolled System subsequently follows the relevant connection flow for either "managed Agent mode" or "unmanaged Agent mode". "Managed mode" is a connection flow that is governed by Tags and Policies. "Unmanaged mode" is a connection flow wherein Tags and Policies have not been specified for use with the System and therefore an explicit, out of band intention to connect must be established between or provided by System Administrators.

System enrolment is an additive or subtractive process in the sense that following creation of Carol's account, neither System1 nor System2 are known to the Platform. After the Agent software is installed on the relevant systems, Carol can then use the Platform's portal to start building and defining a network of connectable Systems for her organisation. When connectivity is subsequently established between her Enrolled Systems, the connection may be achieved using either the unmanaged technique disclosed in WO 2017/060675 (i.e. the "you tell me your certificate name and I will tell you mine" approach) or the centrally managed "Tags and Policies" approach described herein, and which involves the use of Policies and possibly Tags that are defined by Carol for specific Systems and pushed to those Systems at the appropriate time(s).

An Enrolment Key could be a single-use key for adding a System once and then the key is disabled. Alternatively, the key could be a multi-use key. Each Enrolment Key may apply an administrator configured set of initial (possibly default) set of Tags to an Enrolling System. Therefore, an Enrolment Key can be associated with a set of rights and rules (which we will describe below in the "Tags and Policies" section) and any System that is enrolled with that Enrolment Key will automatically inherit the associated rights, rules and constraints. This means that Carol does not need to manually define the rights, rules or constraints for each System upon enrolment, as the Platform can apply them automatically using the Enrolment Key. If the Tags to which an Enrolment Key applies are subsequently changed by Carol, this does not retrospectively affect the initial set of Tags applied to Systems that were previously enrolled using that same key. Therefore, Tag membership via an Enrolment Key can be viewed as a point-in-time snapshot of a Carol's decisions or management Policies.

Using the interface provided by the Platform's portal, Carol can designate an Enrolment Key for use with certain types of Systems. To facilitate this, the Platform allows Carol to attach a label or description to each of her Enrolment Keys. This makes it easier for Carol to recognise the Enrolment Keys and their designated purpose as "raw" keys are long strings of hexadecimal digits which are not easily handled by humans. For example, if Carol wishes to enrol a new laptop to her Organisation account she might use an Enrolment Key labelled "Laptop key" to enrol that system with the Platform.

In some but not all embodiments, Enrolment Keys may only apply Tags to Systems that are being enrolled if the following conditions are true:
- a System is being enrolled for the first time; and/or
- an Enrolment Key has been configured within the Platform to attach a Tag to newly enrolling Systems.

Thus, in summary, an Enrolment Key identifies the organisation that an Enrolling System belongs to, and Carol can specify a set of "initial" Tags to be assigned to that key such that the set of Tags are applied to all subsequent systems which are enrolled using it. For example, consider an Enrolment Key that Carol labels as "All Staff Enrolment Key". This could be configured to automatically apply the tag "all-staff" to Alice's laptop when it is enrolled using that particular Enrolment Key. This is, however, the extent of the relationship. Carol is able to add more Tags to the user's laptop e.g. "guest-computers", "uk-laptops" etc. or she could remove some or all the Tags. The Enrolment Key is irrelevant and has no direct or lasting relationship with an Enrolled System.

Preferably, the Platform allows Carol to remove or disassociate a previously Enrolled System from an account. Over time Carol will most likely wish to reconfigure the state of connectivity defined at the Platform. Systems will be added or removed and Carol will need to maintain and reconfigure the remaining Systems enrolled with the Platform. This can be achieved by removing the link between the System and the account and/or Enrolment Key with which the System is associated at the Platform.

Therefore, the Platform provides a tool for the specification, configuration, re-configuration and/or update of a computer-based network. The disclosed use of the Enrolment Key reduces the amount of time, effort and processing resources required when specifying or reconfiguring the network. The described use of Enrolment Keys provides significant technical advantages, including but not limited to:
1) enabling the definition of Tags and Policies as described herein
2) providing a simple, quick and efficient mechanism by which Systems can be associated with an Organisation's account on the Platform
3) providing a mechanism for establishing different initial security and permission levels for the Systems that are associated with an Organisation's account.

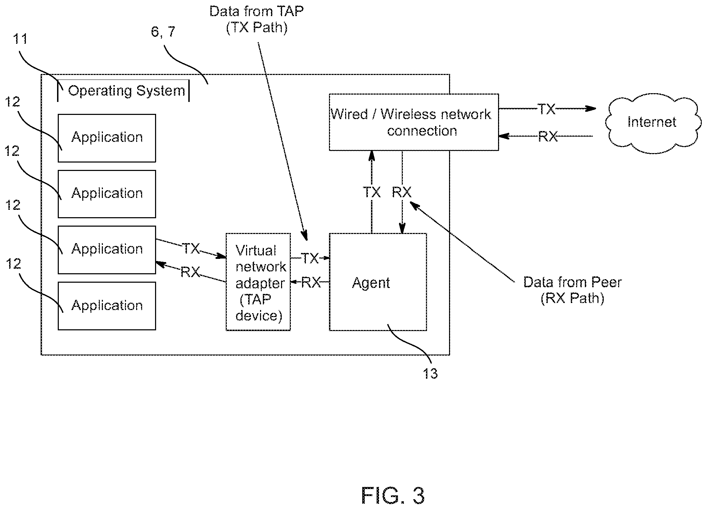

Following enrolment of a system with the Platform, Carol is able to be able to define the controls and/or requirements that she wishes to apply to that System. This is achieved using the "Tags and Policies" features of the present disclosure, and illustrated in step 4 of Figure 1. As with the Enrolment Keys, Tags and Policies are stored at the Platform. However, in contrast to the Enrolment Keys, rather than being generated by the Platform and provided to Carol she determines the Tags and Policies for a given System or set of Systems herself. She defines these, records them and applies them to the desired System(s) via the interface provided by the Platform's web portal (Figure 2, 3). These aspects are now described in more detail.

### TAGS

From one perspective, a Tag can be described as a label for a category, class or type of enrolled System which allows Carol to group certain Systems together which share similar characteristics (i.e. business unit, security level or function). In this way, Tags can be viewed as denoting a System's membership within a group or class, and are binary in the sense that a given System is either a member of that defined Tag, or it is not. The relationship is many-to-many in that a particular System can be a member of multiple classes by having multiple Tags applied to it, and Tags can apply to multiple Systems.

Tags can be used to logically associate or group together Systems which share either a common function, role or purpose. The function may be a technical function or may be related to the operational activities of an organisation e.g. business entity, organisation or unit thereof (e.g. accounts team, developers, board members). A Tag may apply to Systems which share a common purpose or function (e.g. web servers, database servers) or a common security level (e.g. home workers, system administrators) or some other shared criteria or attribute. This shared attribute gives rise to a relationship that is reflected in the Tag membership.

Thus, Tags can be described as free-form text labels attached to one or more systems that are enrolled with an account on the Platform. Tags allow Carol or Platform Administrators to group or logically associate Systems which share similar characteristics (i.e. business unit, security level or function). They can be manually added to an enrolled System by Carol, or an Enrolment Key can be configured to apply an initial set of Tags to enrolling Systems.

Tags can include zero, one or more Tag Membership Requirements which define when and/or how a resource belongs to a Tag class. The Tag Membership Requirements may be encoded in machine executable form and subsequently enforced by Policy. For example, a Tag for "Guest laptop" may have the requirements that the Tag only applies if the tagged system:
- has anti-virus protection enabled
- is within a permitted geographic location
- is running Windows 10
   - is fully patched
   - is a member of the "Developers" security group
   - has a user logged in who is a member of the "Administrators" security group.

It should be noted, though, that equally a Tag may have no Tag Membership Requirements at all and may still be valid, applied and effective.

Thus, via the use of Tag Membership Requirements, Carol can specify a granular level of constraints and permissions which apply to members of each Tag, and can specify when Systems become or cease to be active members of that Tag. Tag Membership Requirements are additive in the sense that they must all be met in order for a System to be counted as an active member of a Tag. For example, if Carol has associated a particular System with the "Guest laptop" Tag, and that System does not have anti-virus protection enabled as per the Tag Membership Requirements, it is not considered to be an active member of the Tag regardless of where it is located. Similarly, if a System tagged as "Guest laptop" does has antivirus protection enabled, it will still cease to be an active member of the "Guest laptop" Tag once it is known to have moved out of the permitted geographical location defined in the Tag Membership Requirements. (Geographical location may, for example, be determined using an IP lookup database although any known technique could be used).

In an example, suppose that a "Workstation" Tag is added to all Systems which function as user workstations within an organisation but Carol wishes to specify that the given Systems are should only inherit the relevant permissions for workstations while they are physically location within the office. For example, a work laptop may have certain connectivity to other Enrolled Systems when in the office, but not when travelling. Carol adds a "Public IP Address requirement" to the "Workstation" tag that specifies the public IP ranges of the office network(s). When any Systems tagged as "Workstation" connect to the Platform, the Platform attempts to validate the Tag requirement for that System. If the System is not at the office the validation fails and the "Workstation" tag temporarily disables for that particular System. When the laptop is brought back to the office and connects to the Platform, the Tag Membership Requirement is met and the "Workstation" Tag enables again for that System and, by extension, any Policies which reference that Tag thus restoring connectivity.

It should be noted, however, that Policies due to dynamic operating conditions and may only be disabled by a Platform Administrator or Carol. Whereas a Tag is either active or disabled for a given System at any given point in time, but the presence of that Tag in a Policy remains constant unless re-configured by a Platform Administrator or Carol. For example, the "Workstation" Tag may be applied to thirty different Systems that Carol has enrolled with the Platform. If one of those thirty Systems violates the Tag Membership Requirements of the "Workstation" Tag then the resulting change, i.e. disablement of the Tag, is constrained to that specific System only. A Policy which might specify that Systems tagged as "Workstations" should connect to Systems tagged as "Servers" would be unaffected by the change.

Preferably, the Tag-based approach may be implemented on a per System basis. In other words, if a System is removed from Tag Membership Requirements that may have a consequential effect on the application of a Policy. The Policy itself is not disabled, the System is simply disabled from Tag membership and, by extension, because the only relationship between a System and a Policy is via Tag membership the Policy ceases to apply to that particular System. Thus, Systems may be "active" or "inactive" in relation to a Tag. To use an alternative wording, a System's Tag membership can be active or inactive at a given point in time based on the dynamic state of a set of Tag Membership Requirements that each System may, or may not meet, and thus the applicability of a Tag to a given System is determined dynamically rather than being static. Tag membership can change from active to inactive and vice versa. For example, a particular System may have the tag "Office Workstations" applied to it by Carol or a Platform Administrator, but if that System is not in the office the System is simply not active in respect of the Tag, even though the Tag relationship remains.

Other, non-limiting and non-exhaustive examples of Tag Membership Requirements could include:
- Public IP Address Range:
   Only Agents that connect to the Discovery Service from a public IP address in a specified IP range will be considered members of the Tag.
- Authenticated User:
   To join a Tag with the authenticated user or group requirement, the Platform must have authenticated the user and associated Agent connected to the Discovery Service (which may have federated authentication to the Organisation's own provider, Or an IdP / OpenID connect / SAML service provider)
- Authorised User Claims:
   The Authorised User requirement is an addition to the Authenticated User requirement, and allows Tag membership to be constrained by the set of Claims in the Authenticated User token. This would allow restriction on the Tag membership based on user role or other properties.
- Firewall State:
   The firewall state requirement indicates that for a System to be a member of a Tag, that System's local firewall must be configured in a specific way.
- OS Updates Requirement:
   The OS Updates requirement indicates that for a System to be a member of the Tag, that System's Operating System must have the requisite level of updates and/or anti-virus definitions.

As explained above, Tag Membership Requirements can be dynamic and can apply/not apply at a given point in time. The status of "active" or "not active" with regard to Tag membership can be determined on an event-driven basis, such that a detected event can trigger a change of Tag membership status for a given System. The triggering event can be detected by an event listener or monitoring component, or can be communicated to the Platform from an internal or external source. For example, a GPS tracker may send a signal to indicate that a given System has been taken out of the office or other permitted geographic location, or an internal clock may indicate that a process has been running for a given length of time etc. The type or nature of possible Tag requirements is infinite and are configured by the Platform Administrator role or Carol.

An advantage of the Tag-based approach is that Carol does not need to define, apply and review the settings, permissions or controls for individual Systems. Instead, she can define a System as belonging to a particular logical group of Systems by applying a Tag to it and that System will then be bound by the Tag Membership Requirements of that Tag. This provides a simple, efficient and secure way of managing and controlling systems on a virtual network. Tags, however, become even more useful when used in conjunction with Policies.

### POLICIES

Policies comprise Tags. In essence, a Tag is a way of applying Policies to Enrolled Systems without the need for individual settings for each System. Like Tags, Policies are also set by Carol or the Platform Administrator via the Platform's Portal interface. However, while Tags relate to Systems which share similar characteristics (e.g. because they belong to the same business unit or share a common security level or function) a System may be a compliant, or non-compliant member of a tag. System membership of specific Tags is binary in nature, a given System either is Tagged, or it is not. Policies, on the other hand, define rules which are applied to permit, restrict or deny the flow of information between Systems based on their Tag membership and compliance status with the Tag Membership Requirements. While Tag membership is defined on a per-System basis, Policies are defined at a global level within each Account and are composed of Tags. Systems which are "active" in respect of a given Tag may inherit one or more Policies which govern traffic flow and connectivity between said systems. Policies can be influenced or dictated by one or more factors. For example, these might include one or more of: System identity, end-user identity, point-in-time security attributes of the end-user's Systems and metadata or factors such as network location, geographic location, time of day and any other heuristics that might feed into a go-no go decision from the Policy engine.

By way of example, Laptop1 may be a member of the Tags: "uk-laptops", "developers" and "all-staff", while Laptop2 may be a member of the Tags: "uk-laptops", "administrators", "all-staff". Carol may set the following Policies:
Policy name: All Staff to File Servers
Policy sender tag(s): "all-staff"
Policy receiver tag(s): "file-servers"
Policy name: Administrators to Servers
Policy sender tag(s): "administrators"
Policy receiver tag(s): "staging-servers", "production-servers", "database-servers"

Thus, Policies define and constrain which Peers an Enrolled System can communicate with and how. If a particular Policy does not include a particular tag, then Systems with membership of the omitted tag will not have any connection to systems of Tags which are and no tunnel for communication will be established between them. Tags unreferenced by Policy and by extension any member Systems remain unaware of one-another and any connectivity implied by Policies which reference other Tags.

Enrolled Systems act independently of each other in accordance with the Policies that have been assigned to them by Carol and in response to the Policies that are computed and sent to them by the DS. If a Policy specifies that System1 should connect to System2, System1 will ask the DS for an introduction and vice versa with System2. However, System1 and System2 do this independently of one another without any shared knowledge of what the other is doing. In accordance with preferred embodiments of the disclosure, Policies specify when and how Systems within that Tag membership can connect, send and receive data. Traffic Rules govern Traffic Flows between Enrolled Systems and are specified as receive-oriented rules. In other words, Traffic Flow controls are only defined from the perspective of the receiver side of the Policy. Send-side restrictions are not defined because defining who can receive what and from whom also implies sender restrictions. A System may be a member of multiple or no Tags. Additionally, or alternatively, a Tag may be referenced by multiple or no Policies.

Preferably, the Platform is "default deny" with respect to visibility and Traffic Flow between Peers until a Policy is defined by Carol or a Platform Administrator that allows it. The Policy controls visibility and connectivity between Enrolled Systems. As these Systems are at either end of a communication channel, when viewed from the perspective of one of the systems they can be perceived as the sender or receiver of network traffic at a specific point in time.

A Tag attached to the Sender side of a policy that relates in some way to a receiver Tag implies that all sender Systems that have that Tag assigned have permission to connect with, and send data to, all of the receiving Systems that have the corresponding receiver Tags assigned. However, until a Tunnel is actually established between System1 and System2 the Traffic Flow is not enabled. In a default-deny configuration, Traffic Rules may be required to enable a Traffic Flow. Traffic Rules define the network traffic that is permitted between a given sender and receiver, and Traffic Rules can control a variety of connection behaviours. Examples of traffic rules may include, for example, but are not limited to:
• *Incoming Port:*
   This rule can constrain the port number used on the incoming traffic at the receiver end of a Policy. Once a sender has sent data to the receiver on that port, the Platform may permit traffic to return on the sending port to create a situation where Traffic Flows can only be initiated by System on the Sender side of the policy to Systems on the Receiver side.
• *Permitted Bandwidth Consumption:*
   This rule can constrain or restrict the bandwidth carried by the Tunnel between connected Peer's by limiting or capping the data throughput of connections established between System in association with a given Policy.

In a preferred embodiment, a sender may initiate Traffic Flows to a receiver, by not vice versa. Traffic Flow restrictions (which are also known as access control lists or "ACLs") are defined by Policy but only specified on the receiver side of that Policy. However, in practice, both sides of a connection apply the same Policy, and therefore if a Policy only permits System1 to receive a particular type of traffic from System2 (for example, tcp/3389 traffic, then System1 can only send tcp/3389 traffic to System2). The application of Traffic Rules happens at both ends of the Tunnel on the sender and the receiver side, even though Traffic Rules are defined only on the receive side of the Policy. The send side restrictions are implied by the Traffic Rules defined for the receiver side of the Policy.

The Policies described above may be implemented via a "Policy Engine". The Policy engine may perform the following roles:
1) when a System connects to the DS, and if the System is managed, the DS specifies which subscriptions it should request based on information provided by the DS, but computed by the Policy engine;
2) when a System requests a subscription to another, the Policy engine checks that the requesting System is indeed allowed to request that subscription at the time of the request and either allows or denies it;
3) when the DS gains an awareness of mutual subscription between two Systems which are currently online, it checks with the Policy engine again to confirm that this connection is still allowed to take place before making the introduction and sending Connection Candidates to each System;
4) the above-mentioned operations can be important because time may elapse between each operation; if the Policy has been updated between operations the Platform does not consult the Policy engine between the connect, subscribe and introduce events it might be working with outdated data.

We now describe in detail how the connection process is performed in respect of two enrolling peers - System1 and System2 - to establish a secure communication channel (Figure 2, 10) between them.

### Tunnel Establishment

Once Systems 1 and 2 have been enrolled using their respective Enrolment Keys, they each open persistent connections (Figure 2: items 9 and 8) to the DS (Figure 2: item 4) which act as "command and control" channels. These may also be referred to as "signalling channels". System1 may perform the following operations in order to connect with System2:
1. Request for certificate:
   System1 generates a cryptographic key pair and sends a Certificate Signing Request (CSR) plus a valid Enrolment Key to the Certificate Authority (CA); the CSR includes System1's public key and is digitally signed to provide a demonstration that System1 knows the corresponding private key. The CSR does not need to include any information relating to Alice's real-world identity; this is in contrast to the traditional PKI operating model which is designed to create a strong cryptographic association between a certificate and a known identity
   System1's Enrolment Key is also sent alongside the CSR; enabling the platform to recognise the Account to which the enrolling System should be assigned and any initial configuration state defined by Carol or Platform Administrators;
2. The CA creates and signs a digital certificate:
   the CA arbitrarily selects an arbitrary (random or pseudo random) identifier to pair with System1's chosen public key. The arbitrary identifier is the Certificate Name and is used as a Common Name. In some embodiments, the identifier may be short whereas in others it may not. In embodiments where cooperating entities manually exchange certificate names the use of a short identifier is advantageous. However, in embodiments that utilise the tags and policies features described herein, the disclosed platform is able to manage the exchange centrally. Therefore, the use of certificates with longer names is not disadvantageous in such embodiments because human individuals are not involved in the process. In fact, it can be preferable because it avoids the unnecessary consumption of short name identifiers in scenarios where humans are not manually involved in an exchange.
   The certificate name is unique within the scope of the platform, such as a domain name or company name, for example. It is unique to the issuing CA in the sense that the CA will not associate that same identifier with any other public key during its lifetime. The CA maintains a long-term, append-only record of all certificate names that it has ever generated, and the public keys to which those certificate names were mapped;
   the assigned certificate name is arbitrary in the sense that it is meaningless, and not tied to or generated with reference to a user or endpoint's identity. This is important because the certificate name is meaningless in any real-world context. The certificate name does not need to be kept secret and can be shared over a non-secure communication channel;
   the CA 5 generates a new certificate in response to receipt of the signed CSR which includes System1's public key and the unique CN value as the certificate name; the digitally signed certificate is returned to System1 in response to the CSR; the CA 5 maintains a database/storage facility to record the certificate name and its corresponding public key. Optionally, the CA updates, signs and re-publishes an updated merkle hash tree for transparency and auditing purposes.
3. Managed Mode: Tags and Policies apply
   In this embodiment, System1 is not locally managed; instead, Carol has defined at least one Tag and associated Policy and assigned the Tag to System1. The Platform determines that System1 is configured for "managed mode" operation and computes permitted connectivity based on the Agent on System1's report local state and Policy configuration that is stored on the Platform. The Computed Policy is sent to the Agent on System1 where it is applied.
4. The DS Computed Policy determines that System1 and System2 should be connected and pushes the Computed Policy to each System. Each System then contacts the DS and requests a subscription to the other System. When the DS sees mutual subscriptions it provides each party with Connection Candidates which they can use to attempt a direct connection with one another in order to establish a Tunnel between them and also includes one low priority "relay" Connection Candidate which may be used to reach a Relay Server in the event that a direct connection cannot be established; therefore, if the direct connection fails, the Systems can fall back to using a Relay Connection;
   the DS sends a Policy to System1 which includes the Certificate Name of System2; the DS also sends a Policy to System2 which includes the Certificate Name of System1; in this way, the Certificate Names are exchanged; as a result, each System knows the other's Certificate Name.
   It is possible, though, that System2 may not actually be online when System1 makes the subscription request to the DS. For this reason, the request may be referred to as a subscription because System1 requests that the DS informs it - potentially at a future point in time - that System2 is online and has generated its respective subscription request back to System1. At that point in time, the Discovery Service detects that both Systems are online and sends Connection Candidates to them both in order to facilitate a network introduction such that can may attempt to connect with one another.
5. Connection Establishment
   The DS 4 preferably facilitates a direct connection 10 between System1 and System2 by providing each with System with a set of Connection Candidates that constitute network reachability information for the other System. Both systems simultaneously attempt to initiate outbound network connections to one another using all of the Connection Candidates provided in priority order. Multiple network connection pathways may be established during this process, but only the network connection to the Connection Candidate with the highest priority is retained, any other connections are closed when a higher priority alternative network connection established. This mechanism is known in the art and generally used to prefer establishing connectivity using network routes with less latency or more bandwidth.
6. Key Exchange :
   the Agents on System1 and System2 perform a Certificate Exchange during which both demonstrate knowledge of their respective private keys using pre-existing industry established key exchange mechanisms, checking that the exchanged Certificates are issued by the private platform CA (Figure 2: 5), that the exchanged Certificates are valid and that the Certificate Name on exchanged Certificates matches that which was provided previously, as explained above; this can be performed by requiring one Agent to sign a random challenge value (using knowledge of their respective private keys) generated by the party requiring proof of knowledge of corresponding Private Key;
   thus, the Agent on each system is primed in advance of Certificate Exchange to expect a particular Certificate Name e.g. ABCDE as a Common Name on a Certificate for a given peer. The Agent maintains an address book, database or other record which stores the Certificate Names for the peers that a System 'knows' e.g. System2's Agent stores the certificate name of ABCDE for System1. So, if System2 then receives a Certificate purporting to be from System1 with a common name of VXWYZ, System2's Agent knows to discard the communication and investigate for evidence of tampering because it did not receive an expected Certificate Name.
7. Tunnel Establishment or Failure:
   If Certificate verification and Key Exchange succeeds for both Systems, the Tunnel can be set up; if not, the Tunnel establishment attempt fails.
   When the Systems (Figure 2: 6, 7) have a network communication channel 10 established between them, and Certificates are exchanged and Public Keys are mutually known, the Systems may use the exchanged information to bootstrap encrypted communication between themselves via any suitable method or protocol. However, a preferred embodiment may comprise the use of an authenticated Key Exchange. For example, a Key Exchange algorithm (such as ECDHE) and a Signature Algorithm (such as EdDSA) may be used to establish a shared secret, and thereby enable confidential communication between the Systems.
   In other words, when the two Systems have been successfully introduced to each other via the DS they and established an unencrypted network connection over which they can communicate, they perform a Key Exchange. That Key Exchange produces a mutually known shared secret which allows the connected Systems to start encrypting subsequent messages to one another. The original unencrypted connection remains in place from start to finish i.e. is persistent, although the privacy of the communications is improved due to the encryption that can be used once the Key Exchange process completes. If Key Exchange cannot be completed the connection is discarded by both parties.

In contrast to the disclosure of WO 2017/060675, this connectivity is achieved by a machine-to-machine, automated process facilitated by the Platform without the need for manual intervention. This provides the benefit of being easier, more efficient, secure and simpler for end users; it reduces the likelihood of human-originating errors and thus the time, resources etc required to establish the desired connectivity and communication channel. The solution also scales more effectively to larger groups of participants avoiding the need for each party to directly exchange Certificate Names with every other.

Thus, compared to conventional approaches, embodiments of the disclosure provide:
- reduced dependency upon trusted third parties to establish confidential connectivity
- use of CSR which does not contain information about the applicant
- use of the CA that is a private component of the Platform to generate a Certificate Name which serves as a Common Name that is bound to a requestor's Public Key via cryptographic signing and issued as a Certificate to the requestor in response to a Certificate Signing Request (CSR) containing an Enrolment Key
- the ability for cooperating parties to authenticate one another and establish direct network connectivity using outbound-only network connections to the Platform and to other Systems
- the ability to exchange, in a machine-to-machine manner, Common Names on their Certificates before communication can take place
- the use of Policies and Tags for central management and control of Enrolled Systems for automation of the introduction and connection process performed between them
- a Discovery Service which provides network reachability information in the form of Connection Candidates to Systems based on Certificates, Common Names and Policy
- a Discovery Service which also provides a traffic relay capability between Systems should they fail to establish a direct network connection with one another for any reason (i.e. an aggressive NAT configuration)
- The use of the Enrolment Key to automatically associate newly enrolling Systems to predefined Policy and connectivity prior to Systems actually enrolling

### Hole punching:

As shown in step 2 of Figure 1 and explained above, when Policy determines that two Enrolled Systems should be connected, the Platform's DS send Connection Candidates to the Agent on both Systems which can be used to attempt to establish network connectivity directly between the two Systems. System2 may receive one or more Connection Candidates that the Agent software can use to attempt to reach System1. This can be referred to as "a network address or network reachability information". The DS facilitates the introduction between Systems 1 and 2. Each Connection Candidate is made up of an IP address, a port number and a protocol which represents the network address, or network reachability information for another System.

In line with standard network security practices, System1 and System2 may have firewalls or have routers which use network address translation (NAT) to protect their networks. Normally, if System1 has sent traffic out through its firewall, System2 is able to respond back to the Agent on System1 through System1's firewall due to an assumed permission based on System1'sinitial outbound communication. In the current scenario, when System1 tries to connect with System2, System2's firewall will reject System1'sunsolicitied communication. However, the DS makes an introduction between Systems 1 and 2 simultaneously, so when System2 also tries to communicate with System1 momentarily later, System2's communication appears to System1 to be a reply to its initial connection request packet and so System1'sfirewall allows System2's communication through. System1 can then respond to System2's communication and now both parties have established a network connection to one another from behind firewalls which are closed to unsolicited ingress traffic, sometimes known in the art as stateful firewalls. Both firewalls remained closed to unsolicited ingress traffic, and there was no underlying network reconfiguration required but both System1 and System2 are now able to exchange network traffic with one another. This is a technique known in the art as UDP or TCP hole punching (as it is frequently used with the UDP and TCP protocols) and can be performed in respect of UDP or TCP network traffic. In the event that the coordinated connection attempt at hole punching fails for some reason, the connection can alternatively be made via a relay service provided as a component of the Platform.

### Virtual Network Interface (VIF):

With reference now to step 3 of figure 1, and also to Figures 2 and 3, once System1 and System2 have an established network connection and knowledge of a common shared secret to encrypt subsequent communications (Figure 2: 10) both parties create a Virtual Network defined only between them using the Platform facilitated Tunnel by creating new Virtual Network Interfaces on each System and assigning special IP addresses to each Virtual Network Interface such that other applications (12) on their respective Systems can transparently consume the provided Tunnel without needing to significantly change the way in which they function. In order to establish the Virtual Network between System1 and System2, a Virtual Network Interface (VIF) is provided at each end of the connection. The VIF component emulates a physical ethernet cable, and has an IP address, subnet and performs the same role and provides the same functionality as a physical network adapter. When System1 tries to talk to a System2, instead of routing through a physical network adapter the communication is routed via the VIF on System1, through the Tunnel and in to the VIF at System2. Therefore, the direct, secure communication channel 10 that has been established between System1 and System2 by the operations described above emulates a direct network connection with the addition of encryption. The two Systems at either end are agnostic to the fact that they are communicating via an emulation carried by the Tunnel, and existing applications (12) can send packets and network traffic back and forth directly across the Tunnel as if they were doing so in the conventional manner using a traditional Internet-based network.

With reference to Figures 3 to 6, when System1 receives data from System2 or any other connected peer, after decryption the received packet enters a processing pipeline. The pipeline consists of zero or more modules which individually process the received data packet and (may) decide to take specific actions on the received packet such as DROP, ALLOW, ALTER or INJECT. If one module decides to DROP a packet, the remaining modules in the pipeline will never get to see the received traffic and it will not be delivered to the local TAP virtual network interface for applications (12, e.g. the web browser) running on System1 to consume. To that end, each module in the processing pipeline is assigned a priority number which determines the order in which each module has an opportunity to process the received data packet. Each module has the opportunity to process data received either "From Peer" or "From TAP", and each module may also store metadata or other information persisting from one invocation to the next.

### In-Use Example

By way of example, suppose that Carol has registered with the Platform and therefore has an account and at least one Enrolment Key. Carol then:
- defines a Tag called "Guest Laptops"
- adds a Tag Membership Requirement to the "Guest Laptops" Tag requiring member Systems to have antivirus software installed and running in order to be considered Compliant Members of the Tag
- Adds a requirement to the "Guest Laptops" tag which requires member Systems connected to the DS from IP addresses known to be geographically located in London in order to be considered Compliant Members of the Tag
- attaches the "Guest Laptops" Tag to an Enrolment Key called "Guests"
- Carol then creates a Policy called "Guest Laptops access to Servers" which:
   ∘ restricts connectivity to between Monday to Friday, 09:00-17:00 GMT; and
   ∘ attaches the "Guest Laptops" tag to the sender-side of the policy
   ∘ attaches the "Servers" tag to the receiver-side of the policy
- Carol then uses the "Guests" Enrolment Key to enrol a laptop to her account; the Certificate Name assigned to the Certificate from the Platform in response to a CSR is PNL43
- System PNL43 then connects to the Platform's DS, which checks its stored configuration records associated with PNL43;
- the DS determines that PNL43 is attached member of the tag "Guest laptop" because of the Enrolment Key which authorised it to join Carol's account and also informs the DS of the Certificate Names for other resources that PNL43 can communicate with based on the Policy e.g. Systems GFS68 and LDT21 which are members of the "Servers" tag
- The DS knows that PNL43 is a Managed System because it has a Tag associated with it and, therefore, the DS can introduce PNL43 to the other peers accessible according to Policy . (If no Tags were associated with the PNL43, the System would be considered an Unmanaged System and to build connectivity using the platform, the end-user of the laptop would need to manually exchange Certificate Names with other system operators in-person)
- The DS pushes configuration to PNL43 based on Policy, which tells the Agent it should request a subscription at the DS to be introduced to GFS68 and LDT21.
- Separately, the DS has also pushed updated configuration based on Policy to GFS68 and LDT21 informing them that they should also be requesting subscriptions to PNL43.
- Once a subscription request is expressed to the DS mutually by two systems, the DS sends Connection Candidates to both Systems. In this example the DS would send Connection Candidates to PNL43 and GFS68 and separately send Connection Candidates to PNL43 and LDT21, so that all systems may attempt to connect with each other according to Policy.

Therefore, the disclosure provides an improved approach for capturing and exchanging the intent that two or more Systems need in order to connect with each other. Instead of the operator of PNL43 exchanging Certificate Names with operator(s) of GFS68 and LDT21 via an manual method, the DS provides the necessary information to the Systems because the DS has a stored record in the form of a Policy configuration that records Carol's intent to connect the systems. Therefore, the DS is pre-authorised to make the introductions between the Systems and provides them with the necessary Connection Candidates.

The Tags and Policies enable a many-to-many relationship, as a given System can be a member of more than one Tag, and thus will inherit the Policies (rules) of each Tag that it is associated with a given Policy. Carol is able to describe and define connectivity in her Account by applying Tags to the relevant systems and creating Policies composed of those Tags. This enables the construction of complex topologies but easy-to-configure connectivity topologies. Through the use of Tags and Policies, embodiments enable a transition from local i.e. device-level control of Tunnels to a centrally controlled approach i.e. at the Platform, defined by Carol or Platform Administrators.

Advantageously, Carol can push changes and reconfigurations down to multiple Systems across the Account in one simple, efficient and quick operation that is performed via the Web Portal. Also, there is no need to perform an in-person, out-of-band exchange of Certificate Names as disclosed in WO 2017/060675 because the information that is exchanged is provided by a Discovery Service in the form of a computer-implemented Policy shared by and associated with the Enrolled Systems. Thus, the exchange is performed machine-to-machine rather than manually and mutual intent is established using a pre-determined/pre-defined/stored set of Tags and Policies which provide *a priori* knowledge of which systems have a mutual intent to connect. This not only saves time, resources and processing effort but it provides a more secure exchange mechanism because it reduces the likelihood of interception by any unauthorised parties. It also means that out-of-band challenges such as time zone or language differences are avoided.

### FAKE ARP

We now turn to another aspect of the disclosure, with particular reference to Figures 3 to 6. Consider a scenario in which two systems have established a Tunnel for communication via a Virtual Private Network (VPN). In our example, the Systems establish this Tunnel using an embodiment of the Platform described herein. In such an approach, at least two Systems establish direct end-to-end encrypted connectivity, each side adding a virtual network interface (VIF) to their side of the Tunnel and assigning a virtual IP address to create a which presents a virtual overlay network common to both peers (i.e. without a VPN server in the middle). We will refer to these as System1 belonging to Alice and System2 belonging to Bob to remain consistent with the description above.

As readily known in the art, VPNs are an example of an overlay network. Overlay networks are built on top of the physical infrastructure of an underlay network, such as the Internet, which serves as the data transportation and packet routing mechanism. This physical infrastructure comprises devices such as servers, switches, firewalls and routers. See, for example, https://en.wikipedia.org/wiki/Overlay_network. Therefore, while the VPN provides a logical, abstracted layer of inter-system communications, the data packets are, in reality, encapsulated and carried by the underlay network, but usually in conjunction with encryption where the secret keys are not known to intermediary devices on the underlay network which therefore cannot decrypt the encapsulated packets they carry (hence the private in virtual private network). Devices on the underlay network route traffic between source and destination Systems via standard routing protocols and Internet connectivity (or other interchangeable medium), and packets are delivered based on the destination's IP address and subject to any configuration of the underlay network devices.

### ARP and ARP Cache Poisoning

In the context of a traditional network, in order for hosts to communicate with IP packets, each IP address is mapped to an Ethernet address, known in the art as a MAC address, and the behaviour and resolution of MAC addresses into IP addresses is known as and described in RFC 826, An Ethernet Address Resolution Protocol (ARP). The role of ARP is to translate the IP address used by the underlay network into an Ethernet address that is compatible with operating systems running on devices within the LAN.

In a traditional network, when a system or device is added to a LAN, an IP address is allocated to it so that other devices can identify it and IP packets can be sent between that system and other systems on the network. IP packets are encapsulated and carried by Ethernet frames. Subsequently, when a source system wants to send an IP packet to a destination system on the LAN at a particular IP address, the source system's operating system (OS) needs to know the MAC address that corresponds to the destination's IP address. The OS (11) attempts to resolve this by querying a look-up table that it maintains, known as the ARP cache, which lists known IP addresses that it has previously encountered and their corresponding MAC addresses. If the OS finds an existing entry for the IP address in question, it retrieves the corresponding MAC address from the ARP cache and uses it in the construction of the data packet which is then placed onto the network to be routed to the specified destination. If no existing entry can be found, however, the OS broadcasts an ARP request to all systems in the LAN to ask if any of them are identified by that particular IP address. If a receiving system or device on the LAN recognises the IP address as its own, it responds to the query by providing its own MAC address. The OS (11) adds the responders MAC address to its ARP cache table for future reference, and the data packet is constructed and placed onto the network. Any future traffic that is to be sent to the same IP address will not require another ARP request, because the MAC address will be available to the OS from its ARP cache.

However, this design gives rise to a vulnerability known as "ARP cache poisoning" or "ARP spoofing", in which a malicious third party intercepts an ARP request and responds with its own MAC address. This means that the attacker's MAC address will be added to the ARP cache entry for that IP address and subsequently used when constructing data packets intended for that IP address. As a result, the traffic is diverted to the attacker's machine and the attacker is able to read it, or use it for denial of service (DOS), man-in-the-middle or session hijacking attacks.

Within the context of the present disclosure, the Platform enables creation of a Tunnel which exists as a peer-to-peer overlay network, that may carry encapsulating Ethernet frames between connected Peers across the underlay network e.g. Internet. Therefore, when traffic is sent from System1 to System2, it has to be transported via the physical infrastructure of the underlay layer. However, the IP addresses and subnets of the overlay (VPN) are different from the IP addresses used at the underlay level. When an Agent running on System1 establishes a connection with an Agent running on System2, both Agents need to handle data that is being sent and received, in both directions. Existing applications (12) installed on each system, and also each system's OS (11) , may send Ethernet frames directly to the local virtual network interface (TAP devices) created on the local system by the Platform. This is illustrated in Figure 3 which shows the role of the Agent within the architecture and context of the wider network environment. The Agent running receives packets from the other peers on the VPN (shown as "Data from Peer") and also receives packets from the local operating system as they are transmitted out from the OS system to other Peers (shown as "Data from TAP") in Figure 3.

Recall from the above explanation that Systems enrolled with the Platform receive, from the DS, one or more potential Connection Candidates that they can use to reach other Enrolled Systems. System1 receives one or more potential Connection Candidates that its Agent can use to attempt to reach System2. The Connection Candidates comprise at least an IP addresses and port number that may be used to connect the systems. After connection, data flowing between the connected systems is sent directly from peer-to-peer using their respective IP addresses, and each Agent within the VPN knows the VPN IP addresses of other Peers which it is able to connect with.

As a result, the conventional meaning given to a MAC address (all connecting parties agree a common lookup table binding IP address to MAC address) may be discarded in the context of a peer-to-peer overlay network . An Operating System still requires an IP to Ethernet address binding, but Peers need not agree on the same binding. Recall, that data has to be physically transported over the underlay network which uses different IP addresses from the overlay. This means that traffic flowing between System1 and System2 still needs to conform to the required format expected by operating systems and devices at the underlay layer. In particular, data packets travelling between System1 and System2 still need to provide source and destination MAC addresses so as to satisfy the underlying communications protocol and OS requirements, even though MAC addresses are irrelevant for their purposes.

This challenge is addressed as follows. Suppose that the Agent on System1 has established connectivity with the Agent on System2 in accordance with an embodiment of the Platform described herein. System1 now wishes to send a data packet to System2. (We refer to this as the "inner, or encapsulated data packet"). As MAC addresses are meaningless at the overlay level, System1's Agent generates a spurious MAC address that can be used for the generation of the data packet that it wants to send to System2. This spurious address is a MAC address which appears to be genuine but is, in fact, false and is not the real MAC address for System2. The technique of using spurious MAC addresses may, therefore, be referred to herein as a "Fake ARP" technique. The spurious MAC address can be generated in any suitable way such as, for example, using a random or pseudo-random generation technique, or could be generated using a deterministic approach. Both the source and destination MAC addresses in the data packet may be spurious.

In a preferred embodiment, each Agent maintains its own record of spurious MAC addresses that it has generated for systems that are enrolled with the Platform and that it is able to connect with. Therefore, Agent1 may comprise, or have access to, a database or other repository of fake MAC addresses that it has associated with the IP addresses of Peers. Each time System1 wishes to send data to a given Peer, the Agent will use the same fake MAC address that it has generated and associated with that peer. The sending and receiving Agents do not need to agree on the MAC addresses that have been put into a data packet because they are irrelevant to them. If the Agent on system1 receives an inner data packet with a MAC address from System2 that does not match the entry in its fake ARP cache for System2, it can simply substitute it for its pre-stored fake MAC address before handing the packet to the OS because deliverability has already achieved (the two Peers have all the reachability information they need to send traffic between them). Consistency for the OS is achieved by ensuring that it always receives the same source MAC address for a given sender. As long as the MAC address meets the expected format, the OS has no way of discerning that it is a spurious address and accepts it as genuine. Therefore, it is irrelevant what the sender specifies as the source MAC address in the inner packet because the receiving system will exchange it for the fake address that it has chosen and associated with that sender.

After the fake MAC address has been provided in the "Source MAC address" field of the inner packet, Agent1 encrypts the inner packet and inserts it into the data section of a further data packet which we will refer to as the "outer data packet".

In order to send this packet across the underlay network, though, System1 needs to know the source and destination MAC addresses for the two systems as these are required for completion of the data packet fields that the underlay will need to use. The OS at the receiving end will need to know the MAC addresses for the source and destination. While System1 knows its own MAC address it does not know System2's, so it sends an ARP request to a broadcast address as known in the prior art. In response, System1 receives a MAC address for System2. It uses the received MAC address to complete the field for the destination MAC address in the outer packet.

The outer data packet now contains all the necessary data to satisfy the underlay network's requirements, and it also includes the encrypted inner data packet as data. Agent1 then sends the outer data packet for transportation across the network to the destination specified in its IP address field, which is System2's IP address. At the receiving end, the Agent on System2 unpacks the outer data packet to access the inner data packet and decrypts it. It ignores the MAC address as it does not need it for deliverability purposes and sends the desired data to the specified IP address.

Thus, embodiments of the disclosure provide security advantages in that the threat of ARP cache poisoning is made irrelevant. In such attacks, an attacker would never substitute a real MAC address for a spurious one because this would defeat their goal of diverting traffic to their system. Therefore, the attacker substitutes their own MAC address for the intended one, their own address being a genuine MAC address associated with a network device, albeit unauthorised.

With reference to Figure 4, in some embodiments the "Fake ARP" technique disclosed herein can be implemented as module or component of an Agent installed on an enrolled system as described above, which we will refer to as the "Fake ARP" component. This component may be operative to generate the spurious MAC addresses for other enrolled systems that it is able to connect with via the Platform, maintain a "Fake ARP cache" to record the spurious MAC addresses that it generates, look up the spurious MAC addresses in the fake ARP cache when a data packet is to be sent out, at least facilitate provision of the fake MAC address in the inner data packet. In the embodiment shown in Figure 4, the Fake ARP component acts on the two arrows which point inwardly to the Fake ARP component which is arranged to interface with the virtual network interface (TAP device) installed on the enrolled system, and also with the underlay network.

We now explain the scenario of System1 sending data to System2 in more detail from the perspective of the Platform described above, and with reference to figures 4 to 6. When a data packet is received from a connected peer, the Agent checks the sender protocol (either UDP or TCP), origin IP address and source port of the packet and matches it to existing knowledge of an established connection. This first step provides an understanding of which peer sent the message and is performed because once the initial handshake between the systems is completed, subsequent messages will be encrypted and so the receiving system must use the correct decryption key to access the received data. Evaluation of the data packet starts after the receiver has successfully decrypted the encrypted packet send by the connected peer.

We now explain the processing steps undertaken by the Fake ARP module on each pathway, without limitation, in accordance with a preferred embodiment, again with reference to Figures 4 to 6 and to the section above entitled "Virtual Network Interface (VIF)". Figure 5 illustrates data flow from a connected Peer. As a packet arrives at the module, the first step is to determine if the packet is an ARP frame or not. The Fake ARP module only interacts with the traffic flow if the module itself is enabled. If enabled, ARP traffic is prohibited from crossing the Tunnel, so the packet is discarded and the local ARP cache table for connected Peers is constructed without requiring communication with said Peers. In contrast, if the Fake ARP module is disabled then the module simply enters a mode which appears as a "pass through", recording the sender's MAC address and passing the packet unaltered to the TAP. If the received packet is neither ARP nor IPv4 traffic, the module again enters "pass-through" mode and writes the packet directly to the TAP.

In some circumstances, the received packet may need to be modified in order for the Fake ARP module to function. For example if the received traffic is an IPv4 packet. As explained above, every Ethernet frame requires a MAC address. Usually, the sender is responsible for setting the MAC address of the Ethernet frame, but this gives rise to the potential for ARP cache poisoning attacks. Therefore, the fake ARP module performs two tasks: 1) it prevents ARP traffic from crossing the Tunnel between the two connected peers, but in doing so it also prevents them establishing a common understanding of each other's MAC addresses; 2) instead then, the Fake ARP module randomly generates a MAC address for each connected Peer and replaces the MAC address on any received packet with the locally generated MAC address for said Peer. By doing this, the sender is unable to influence the receiver's operating system ARP table.

In the disclosed solution, each peer has a unique virtual IP address, Peers communicate with each other primarily by sending packets to one another setting by the destination IP address to that of their connected Peer's virtual IP address. For example, System1 is 100.64.0.10 and System2 is 100.64.0.20. These IP addresses only have meaning when System1 and System2 are connected using the disclosed Platform. Without that connection, these IP addresses lose their meaning to each party. If the received packet is destined for the receiver's virtual IP address then in order to complete the MAC address manipulation of the packet we set the destination MAC address to be the receiver's (spurious) local generated MAC address. The sender could not have done this as it has no knowledge of the receiver's MAC address (because the Fake ARP module prevents ARP traffic from crossing the Tunnel).

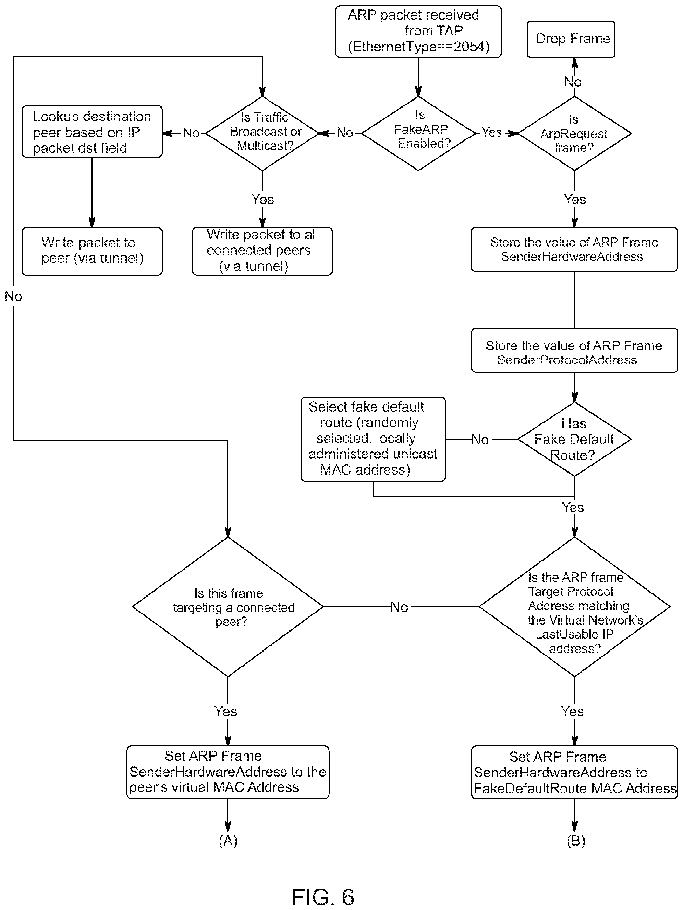

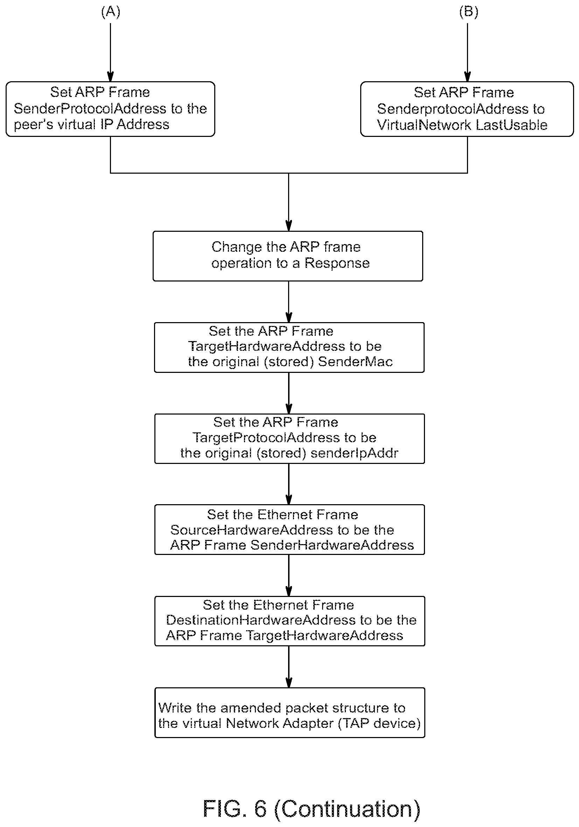

With reference to Figure 6, we now describe the data flow from the perspective of the local virtual network interface (VIF). In this configuration, the Fake ARP module only handles ARP packets, the first action is to evaluate each packet and only interact with ARP traffic entering the module. Furthermore, it only processes ARP frames which are of the ArpRequest type, where the operating system is attempting to acquire data to update its ARP table with MAC addresses for foreign hosts (connected Peers) on the network. Any other ARP traffic message types are dropped.

Non-ARP traffic received from the local Virtual Network Interface is anticipated to either be unicast or broadcast traffic and the module allows these packets to continue in the processing pipeline to be sent on to any connected peers assuming no other successive modules in the pipeline make a contrary decision.

This is the pathway the module takes when the local operating system attempts to find the MAC address for an IP address of a connected Peer by generating and attempting to send an ArpRequest across the Tunnel. The fake ARP module will not allow this packet to cross the Tunnel to reach any connected Peers. Instead, it will create a fake ArpReply packet locally and send it back to the operating system. To do this, the Agent records both the SenderHardwareAddress (i.e. a MAC address: 00:00:00:00:00:00) and SenderProtocolAddress (i.e. IP address: 0.0.0.0) from the ArpRequest packet and stores them in an in-memory database.

The operating system may attempt to direct traffic via default route. Therefore, the Fake ARP module generates a random MAC address and sets the first two bits of the first byte to indicate that this address is both locally administered, and configured for unicast traffic. This MAC address is then stored by the Agent and assigned to whichever IP address it selects as a fake default route.

If the ARP Request was directed at the LastUsablelP address of the Agent assigned subnet, then the Fake ARP module edits the Request packet, sets the SenderHardwareAddress to the pre-generated randomly selected MAC address for the fake default route and sets the SenderProtocolAddress to be the last usable IP address of the subnet. In this way, the module is effectively editing the Request Packet (rather than allocating a new data structure) to set the sender fields to appear to have originated from the original destination the packet targeted, but the destination does not actually exist. This is the reason for the Fake ARP module intervening to intercept the ARP request, modify the packet to look like a legitimate reply and send it back as an ARP response. In effect, the Fake ARP module fakes a reply from the relevant connected Peer.

In some cases, the ARP Request packet received may not be targeting a unicast destination IP address. In such cases, the Agent does not need to fake a response and the original packet may be discarded by the module without eliciting a fake ARP response back to the OS.

As already explained, the Fake ARP module re-writes the sender fields of the ARP Request packet so it can be sent back to the operating system purporting to be an authentic ARP reply to the original ARP request. On this path, the OS has attempted to ascertain the MAC address corresponding to a virtual IP address of a connected Peer. Each time a peer-to-peer connection is established between two Agents, each Agent generates a random MAC address to associate with its far-side Peer. When packets are sent to a far-side peer, the OS attempts to discover the MAC address for that Peer's virtual IP address by placing an ARP request onto the network. This flow alters the ARP Request packet to move the original sender information to the destination fields of the packet and populates the now empty sender information with the locally held information about the remote Peer (i.e. the spurious MAC address and virtual IP address). The operation field is also switched from *Request* to *Response.* Once the packet updates are completed, the Fake ARP module places it back onto the local Virtual Network Interface for the OS to collect and process as if the packet had really traversed a network, reached a remote Peer and elicited a response.

Thus, significant improvements and advantages are provided by the present disclosure compared with the prior art. In a traditional model, for example, the VPN acts as a router and all traffic passes through it. Therefore, the VPN server may police the traffic for fake or illegitimate ARP replies. Moreover, it is able to see it. If it encounters a MAC address that it suspects may be suspicious or malicious in nature, it may attempt to resolve the MAC address. Therefore, in the traditional architecture, ARP poisoning is typically addressed either on the VPN server or on network devices connecting systems together like network switches. By contrast, systems which are peers in embodiments of the disclosure generate false MAC addresses for themselves and every other peer they are connected to. As the VPN server is the overlay network's router in the traditional model, ARP cache poisoning may be a problem for prior art VPNs unless the VPN server comprises a solution to address it.

In accordance with embodiments, the enrolled Peer still comprises a switch that all traffic moves through but instead of it being a VPN server on the underlay network all traffic on the overlay is encrypted so none of the components of the underlay network can see it. Therefore, the underlay switch cannot see nor police the traffic.

As the underlay network takes care of the transportation, routing, and delivery of the data, by the time the data is received at the receiving system and is decrypted by its Agent, the part of the data transfer process which would typically require MAC addresses has already been performed. Therefore, the Agent is able to use spurious MAC addresses in the packets simply for compliance with required protocol formats. The Agent ensures that the MAC address for the source is consistent with historical events when it hands the packet back to the OS.

In summary, embodiments of the disclosure emulate a bridged LAN when running in OSI model "Layer 2" mode. No routing takes place on the virtual overlay network and, therefore, there is a need for protection against ARP cache poisoning. Embodiments may operate at either Layer 2 level (transporting Ethernet frames and associated payloads) or at Layer 3 (transporting IP packets and associated payloads). When in Layer 3 mode, ARP cache poisoning protections are not required as ARP traffic is carried by Ethernet frames, not IP packets. Therefore, ARP cache protection is not relevant in Layer 3 mode because ARP traffic itself cannot be exchanged between connected peers. However, some embodiments may comprise systems running on different operating systems. Some may operate at Layer 2 (e.g. Windows and Linux) while others (e.g. Mac OS) do not allow the creation of a Layer 2 virtual network interface, thus requiring connectivity at Layer 3. In such situations, System1 could be sending Ethernet frames while System2 could be sending IP packets. To address this, embodiments may comprise a "middle layer" that removes the Ethernet frame from anything System2 receives from System1, and in reverse adds an Ethernet frame header to the IP packets System1 receives from System2.

### ENUMERATED CLAUSES:

According to a first wording of the disclosure, preferred embodiments may be provided as described in the following enumerated clauses for illustration only:
Clause 1) A computer-implemented method for establishing or facilitating connectivity between a first system (6) and a second system (7).

The first and second systems may each be:
registered with a computer-based Platform (1); and
associated at the Platform 1 with a cryptographic key and an arbitrary identifier.

The method may comprise:
introducing, for connection, the first system entity (6) to the second system (7) if an explicit or implied permission (and/or intention) to connect has been provided to and/or stored at the Platform (1) for, in respect of and/ or by (possibly both) the first and second systems (6, 7).

The permission/intention may be provided by an authorised or controlling party e.g. administrator or Account Owner. The permission/intention may comprise at least one tag as described herein. The first and/or second systems may be computer-based resources, comprising one or more electronic or virtual devices. The introduction may be performed by a discovery service provided by or associated with the computer-based Platform.

Embodiments of the disclosure may provide methods and apparatus for facilitating, or enabling the provision or emulation of a virtual network adapter at respective ends of a communication channel. It may also be referred to as a solution for providing a computer-based overlay network on top of an underlay network. It may be implemented as a software-based agent that is downloaded and installed on each system that is to be connectable and/or managed via the platform. The platform can be cloud-based, distributed and/or SaaS-based.

The method may comprise downloading and/or installing an Agent (client) substantially as described herein on the first or second system(s).
2) A computer-implemented method according to Clause 1, wherein the permission/intention to connect:
   is stored at the Platform in association with a record or account associated with the first system; or
   confirms, establishes or implies that both of the first and second systems have authenticated (validated) each other's identity independently of the Platform.
   The permission and/or intention to connect may be stored at the Platform on a per-account basis.
3) A computer-implemented method according to Clause 1 or 2; wherein
   the first system is known to or registered with the Platform via the use of an Enrolment Key.
   The Enrolment Key may be associated at the Platform with the arbitrary identifier; and/or generated by the Platform during an enrolment or on-boarding or joining process performed by the first system.
4) A method according to any preceding Clause and comprising the step:
   defining and/or storing a Policy defining traffic flow criteria and/or a tag denoting a class, category or type of computing system; and
   associating the Policy and/or tag with the first system.
   The class/type/category may be a logical classification or grouping, or an association, which may be determined or chosen by an authorised or controlling party such as an administrator.
5) A method according to Clause 4 wherein the tag:
   i) is associated with at least one requirement or criteria which defines and/or controls when or how the label, identifier or tag applies to the first system; and/or
   ii) is defined by an administrator of, or associated with, the first system; and/or
   iii) is associated with at least one Policy or rule defining how or when data can be received by or sent from the first system; and/or
   iv) functions as a label or identifier for a class, type or category of computing system.
6) A method according to Clause 4 or 5 and further comprising the step of
   i) determining whether at least one requirement or criteria associated with the tag is met in respect of the first system; and/or
   ii) using a signal, event, value or other metric to determine whether at least one requirement or criteria associated with the tag is met in respect of the first system.
7) A method according to any preceding Clause and comprising the step of:
   facilitating or establishing a (networked) tunnel between the first system and the second system;
   preferably wherein the facilitation or establishment:
      i) is performed after enrolment of the first and/or second systems at the Platform and their respective (network) connections to a discovery service (4);
      ii) comprises exchanging respective digital certificates between the first and second systems, each certificate comprising:
         the cryptographic key and certificate name associated with the respective system.
   The certificate name may also be known as an arbitrary identifier.
8) A method according to any preceding Clause wherein the Platform:
   i) is cloud-based, at least in part; and/or
   ii) provides a Software as a Service (SaaS) function; and/or
   iii) comprises at least one computer-based component which is operative and/or arranged to perform any of the preceding claims;
   iv) comprises one or more of:
      a portal, preferably a web portal (3); and/or
      a certificate authority (5); preferably wherein the certificate authority is private to the Platform; this may mean that only users authorised at, on or by the Platform can access or use the certificate authority; and/or
      at least one relay service (2); and/or
      an interface; software installed on an end-user's system and/or
      a discovery service.
   The portal may also be referred to as an (administrator) control interface and may be arranged to provide facilitate or enable an administrator, controller, network controller or other authorized entity to control an account at the Platform, specify settings for the account, enroll or remove systems at the Platform and/or specify one or more Tags or Policies as described herein.
9) A computer-implemented method for establishing or facilitating connectivity between a first system and a second system, wherein each system:
   is registered with a computer-based Platform (1); and
   is associated at the Platform with a cryptographic key and a certificate name;
   the method comprising:
   defining and/or storing a Policy defining traffic flow criteria and/or a tag denoting a class, type or category of computer system;
   using an Enrolment Key provided by the Platform for the first and/or second system to apply the Policy and/or tag to the first and/or second system;
      providing reachability information (or "Connection Candidates") to the first and/or second system to enable it to connect to the other system;
      preferably wherein the reachability information is provided if, and only if, any and all rules, criteria and requirements associated with the Policy and/or tag permit connection of, and/or communication or tunnel (connection) between, the first system and second system.
   Respective i.e. different enrolment keys are provided by the platform for each of the first and second systems; Connection candidates may be sent to the first system to enable it to attempt to connect to the second system; and/or Connection candidates may be sent to the second system to enable it to attempt to connect to the first system. The Connection Candidates may be sent from a discovery service provided by or associated with the computer-based Platform.
10. A method according to Clause 9, and comprising the step:
   enrolling the first and second systems at the Platform in association with an Enrolment Key.
11. A method according to Clause 9 or 10, wherein:
   the Policy and/or tag is associated with at least one rule, criteria and/or requirement which defines how and/or when the Policy and/or tag applies to the first system and/or second system.
12. A computer-implemented method for establishing or facilitating connectivity between a first system and a second system, wherein each system:
   is registered with a computer-based Platform (1); and
   is associated at the Platform with a cryptographic key and a certificate name;
   the method comprising steps performed by a Certificate Authority (CA) of the Platform, the steps being:
   receiving, from the first system, the cryptographic key and an Enrolment Key associated with the first system;
   generating, transmitting and/or exchanging a signed digital certificate comprising the cryptographic key and certificate name associated with the first and/or second system.
      The certificate authority may be a component of the Platform; it may be private to the Platform; it may not be a component of an OS of the first and/or second System.
13. A method according to Clause 12 wherein:
   i) the (public component of the) cryptographic key and the Enrolment Key are received from the first system as part of, or in conjunction with, a Certificate Signing Request (CSR); and/or
   ii) the Enrolment Key is generated by the Platform and/or associated with the first system.
14.A method according to Clause 13 wherein the certificate name:
   i) is short relative to the cryptographic key; and/or
   ii) is arbitrary such that:
      the identity of the first system or an operator or owner of the first system cannot be, or is unlikely to be, discerned from the identifier alone; and/or
      its generation is random or pseudo-random;
      selection of the certificate name is not related to the identity of the system or the cryptographic key.
15.A method according to Clause 13 or 14 and comprising the step of:
   transmitting the digital certificate from the Certificate Authority to the first system.
16. A method according to any of Clauses 13 to 15 and further comprising the step of generating the arbitrary identifier using:
   i) a dictionary;
   ii) a hash or obfuscation function;
   iii) a random or pseudo-random data source;
   iv) first-come-first-served basis; and/or
   v) an incrementing counter.
17.A method according to any of Clauses 13 to 16 and further comprising the step of:
   exchanging certificate names between the first and second systems, wherein the exchange is conducted by or via a component of the Platform.
18 A method according to any of Clauses 13 to 17 wherein the cryptographic key is a public key and the first system provides an indication of knowledge of the private key associated with the public key, and wherein the indication of knowledge is provided to:
   the Certificate Authority as part of a Certificate Signing Request;
   the second system as part of an authentication or certificate exchange process; and/or
   a discovery service component arranged to provide directory, registration and/or relay services to the first and second systems.
19. A method according to any of Clauses 13 to 18 wherein the method comprises the steps of:
   i) generating the Enrolment Key; and/or
   ii) associating the Enrolment Key with the first system; and/or
   iii) performing a digital exchange between the first and second systems, wherein the first and second systems use reachability and/or network address information based upon or associated with exchanged certificate names provided by a Discovery Service); and/or
   iv) validating that the certificate names exchanged match the certificate names provided on the digital certificates and validating the knowledge of the private keys; and/or
   v) allowing a secure connection to be established between the first and second systems if the validation is successful for both of them.
20. A computer system comprising computer equipment, the equipment comprising:
   memory comprising one or more memory units; and
   processing apparatus comprising one or more processing units, wherein the memory stores code arranged to run on the processing apparatus, the code being configured so as when executed on the processing apparatus to perform the method of any preceding clauses(s).
21. A system according to Clause 20 wherein the system comprises:
   a certificate authority arranged to generate a digital certificate comprising:
   a public cryptographic key and a certificate name associated with the first system.
22. A system according to Clause 20 or 21 wherein the system also comprises:
   a portal, preferably a web-based portal; and/or
   a relay service; and/or
   a discovery service.
23. A system according to any of Clauses 20 to 22 wherein the system is arranged or operative to:
   generate and/or provide an Enrolment Key to the first and/or second system;
   facilitate transmission of the digital certificate to the second system; and/or provide a Software as a Service facility for public key exchange, validation of the first and second systems; and/or
   facilitate direct connection of the first and second systems using their certificate names.
24. A system according to Clauses 20 to 23 wherein the certificate authority is arranged and configured to:
   generate the digital certificate in response to the Certificate Signing Request from the first system;
   maintain a record of digital certificates generated by the certificate authority; and or issue and/or transmit the digital certificate to the first system and/or second system.
25. A system according to Clauses 20 to 24 wherein the discovery service component is arranged and configured to
   i) access and/or update a register of systems in response to a registration request; and/or
   ii) introduce the first and second systems to one another; and/or
   iii) to transmit a network address and/or reachability information for the first system to the second system and/or reachability information for the second system to the first system.
26. A computer program embodied on computer-readable storage and configured so as, when run on one or more processors, to perform the method of any of preceding clause(s) or embodiments described herein.

Additionally or alternatively, embodiments of the disclosure may be described as comprising a computer-implemented method for establishing or facilitating connectivity between a plurality of systems over an overlay network. Preferably:
- each system in the plurality is registered with a computer-based platform; and/or
- the method comprises downloading, installing and/or executing a software-based Agent on the at least one system, wherein the Agent is operative to enable the at least one system to use, communicate with and/or be managed by the platform; and/or
- the Agent comprises a certificate authority.

Any feature mentioned above in respect of any clauses 1 to 26 may also apply in respect of this wording or aspect.

### FAKE ARP

According to a second aspect of the disclosure, preferred embodiments may be provided as described in the following enumerated clauses. Any feature recited in the clauses of the second aspect may be relevant and applicable to any clause(s) of the first aspect and vice versa. The first and second aspects are not intended to be mutually exclusive, and features from one aspect may be incorporated into the other. Embodiments recited in respect of the second aspect may relate substantially (but not exclusively) to the section of the description relating to "Fake ARP" and with particular reference to figures 4 to 6. Embodiments of aspect 2 may be implemented as a module or component of an Agent as described herein and with reference to the first disclosure aspect. The Agent may be installed on a system. This component may be referred to as a "Fake ARP" component. This component may be operative to generate spurious MAC addresses for other enrolled systems that it is able or permitted to connect with via the Platform, maintain a "Fake ARP cache" to record the spurious MAC addresses that it generates, look up the spurious MAC addresses in the fake ARP cache when a data packet is to be sent out, and/or at least facilitate provision of the fake MAC address in an inner data packet.

Clause 2.1. A computer-implemented method comprising:
i) providing a spurious MAC address in a data packet; and
   sending the data packet from a first system to a second system via an overlay network; and/or
ii) receiving, at a second system, a data packet that has been transmitted from a first system via an overlay network; and
   providing a spurious MAC address to an operating system associated with the second system.

Clause 2.2. A method according to clause 2.1, wherein:
the data packet comprises a further data packet which has been encrypted.

Clause 2.3. A method according to clause 2.1 or 2.2, wherein:
the data packet is sent or received via the overlay network based on an IP address associated with the second system.

Clause 2.4. A method according to any preceding clause, wherein:
the spurious MAC address is a spurious MAC address for the first system and/or the second system.

Clause 2.5. A method according to any preceding clause of the second aspect, wherein:
the spurious MAC address is generated in accordance with a random pseudo-random or deterministic algorithm generation algorithm which facilitates the generation of an arbitrary MAC address that is not based on a real MAC address for the first system or second system.

Clause 2.6. A method according to any preceding clause of the second aspect, wherein:
the spurious MAC address is recorded in and/or retrieved from a repository that is arranged to store one or more MAC addresses.

Clause 2.7. A method according to clause 2.6, wherein:
i) the repository is provided at or in association with the first system or the second system; and/or
ii) the first system and the second system each comprise or are associated with a separate repository; and/or
iii) the method further comprises the step of generating, storing and/or maintaining the repository.

Clause 2.8. A method according to any preceding clause of the second aspect, wherein the first and second systems are each:
registered with a computer-based Platform; and
associated at the Platform with a cryptographic key and an arbitrary identifier;
and wherein the method further comprises the step of establishing connectivity between the first and second systems by:
introducing, for connection, the first system to the second system if an explicit or implied permission to connect has been provided to and/or stored at the Platform for or by both the first and second systems.

Clause 2.9. A method according to any of clauses 2.1 to 2.7, wherein the first and second systems are each:
registered with a computer-based Platform; and
associated at the Platform with a cryptographic key and a certificate name;
and wherein the method further comprises the step of establishing connectivity between the first and second systems by:
i) defining and/or storing a Policy defining traffic flow criteria and/or a tag denoting a class, type or category of computer system;
ii) using an Enrolment Key provided by the Platform to the first and/or second system to apply the Policy and/or tag to the first and/or second system; and
iii) providing reachability information to the first or second system to enable it to connect to the other system; preferably wherein the reachability information is provided if, and only if, any and all rules, criteria and requirements associated with the Policy and/or tag permit connection of the first system and second system.

Clause 2.10. A method according to clause 2.9, and comprising the step:
enrolling the first and second systems at the Platform in association with an Enrolment Key.

Clause 2.11. A method according to any of clauses 2.1 to 2.7, wherein the first and second systems are each:
registered with a computer-based Platform which comprises a Certificate Authority; and
associated at the Platform with a cryptographic key and a certificate name;
wherein the method further comprises the step of using the Certificate Authority to:
receive, from the first system, the cryptographic key and an Enrolment Key associated with the first system; and
generate, transmit and/or exchange a signed digital certificate comprising the cryptographic key and certificate name associated with the first and/or second system.

Clause 2.12. A method according to any of clauses 2.8 to 2.11 wherein the Platform:
i) is cloud-based, at least in part; and/or
ii) provides a Software as a Service (SaaS) function; and/or
iii) comprises at least one computer-based component which is operative and/or arranged to perform any of the preceding claims;
iv) comprises one or more of:
   a portal, preferably a web portal (3); and/or
   a certificate authority (5); and/or
   at least one relay service (2); and/or
   an interface; and/or
   a discovery service.

Clause 2.13. A computer-implemented system comprising:
memory comprising one or more memory units; and
processing apparatus comprising one or more processing units, wherein the memory stores instructions arranged for execution on the processing apparatus and configured so as, when executed, cause the processing apparatus to perform the method of any preceding clause of the second aspect.

Clause 2.14. A computer-implemented system comprising:
an underlay network comprising a physical infrastructure; and
an overlay network arranged for transfer of data between at least one network source and at least one network destination, using the infrastructure of the underlay network;
a first system and/or a second system arranged to perform the method of any preceding clause of the first and/or second aspect.

Clause 2.15. A system according to clause 2.14 and further comprising:
i) a certificate authority arranged to generate a digital certificate, the certificate comprising a public cryptographic key and a certificate name associated with the first system;
   and/or
ii) a portal, preferably a web portal; and/or
iii) a relay service; and/or
iv) a discovery service.

Clause 2.16. A system according to any of clauses 2.14 or 2.15 wherein the system is operative to:
i) generate and/or provide an Enrolment Key to the first and/or second system; and/or
ii) facilitate transmission of the digital certificate to the second system; and/or
iii) provide a Software as a Service facility for public key exchange, validation of the first and second systems; and/or
iv) facilitate direct connection of the first and second systems using their certificate names.

Clause 2.17. A system according to clauses 2.15 or 2.16 wherein the certificate authority is operative to:
i) generate the digital certificate in response to the Certificate Signing Request from the first system; and/or
ii) maintain a record of digital certificates generated by the certificate authority; and or
iii) issue and/or transmit the digital certificate to the first system and/or second system.

Clause 2.18. A system according to clauses 2.15 to 2.17 wherein the discovery service component is arranged and configured to
i) access and/or update a register of systems in response to a registration request; and/or
ii) introduce the first and second systems to one another; and/or
iii) to transmit a network address and/or reachability information for the first system to the second system and/or reachability information for the second system to the first system.

It should be noted that the above-mentioned embodiments illustrate rather than limit the disclosure, and that those skilled in the art will be capable of designing many alternative embodiments without departing from the scope of the disclosure as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of" and "comprising" means "including or consisting of". Throughout this specification the word "comprise", or variations such as "includes", "comprises" or "comprising", will be understood to imply the inclusion of a stated element, integer or step, or group of elements, integers or steps, but not the exclusion of any other element, integer or step, or group of elements, integers or steps. The singular reference of an element does not exclude the plural reference of such elements and vice-versa. The disclosure may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method for establishing, enforcing or facilitating connectivity between a first system (6) and a second system (7), wherein each system:
is registered with a computer-based Platform (1); and
is associated at the Platform with a cryptographic key and a certificate name;
the method comprising:
defining and/or storing a Policy defining traffic flow criteria and/or a Tag denoting a class, type or category of computer system;
applying the Policy and/or tag to the first and/or second system; and
providing reachability information to the first or second system to enable it to connect to the other system if, and only if, any and all rules, criteria and requirements associated with the Policy and/or tag permit connection of or between the first system and second system (6,7).

2. A computer-implemented method according to claim 1, and comprising the step:
enrolling the first and second systems at the Platform in association with a respective Enrolment Key and optionally configuring the enrolment key to apply an initial set of tags to the first and/or second system.

3. A computer-implemented method according to claim 1 or 2, wherein:
the Policy and/or tag is associated with at least one rule, criteria and/or requirement which defines how and/or when the Policy and/or tag applies to the first system and/or second system.

4. A computer-implemented method according to claims 1 to 3, wherein the Platform:
i) is cloud-based, at least in part; and/or
ii) provides a Software as a Service (SaaS) function; and/or
iii) comprises at least one computer-based component which is operative and/or arranged to perform any of the preceding claims;
iv) comprises one or more of:
a portal, preferably a web portal (3); and/or
a certificate authority (5); preferably wherein the certificate authority is a component of the platform rather than being provided in association with an Operating System of the first or second system or by a supplier of the Operating System; and/or
at least one relay service (2); and/or
an interface; and/or
software installed on an end-user's system; and/or
a discovery service.

5. A computer-implemented method according to any preceding claim wherein the Policy:
i) is influenced or dictated by one or more of: system identity, end-user-identity, point-in-time security attributes of the first system or second system, metadata, network location, geographic location, time of day; and/or
ii) is not influenced or dictated by end-user identity.

6. A computer-implemented method according to claim 5 wherein the tag:
i) is associated with at least one requirement or criteria which defines and/or controls when or how the tag applies to the first and/or second system; and/or
ii) is defined by an administrator or controller of, or associated with, the first and/or second system; and/or
iii) is associated with at least one Policy or rule defining how or when data can be received by or sent from the first and/or system; and/or
iv) functions as a label or identifier for a class, type or category of computing system.

7. A computer-implemented method according to claim 5 or 6 and further comprising the step of
i) determining whether at least one requirement or criteria associated with the tag is met in respect of the first and/or second system; and/or
ii) using a signal, event, value or other metric to determine whether at least one requirement or criteria associated with the tag is met in respect of the first and/or second system.

8. A computer-implemented method according to any preceding claim and comprising the step of:
facilitating or establishing a communication tunnel between the first system and the second system;
preferably wherein the facilitation or establishment:
i) is performed after enrolment of the first and/or second systems at the Platform and their respective connections to a discovery service (4);
ii) comprises exchanging respective digital certificates between the first and second systems, each certificate comprising the cryptographic key and an arbitrary identifier associated with the respective system.

9. A computer-implemented method according to any preceding claim wherein:
a Certificate Authority (CA, 5) of the Platform (1), performs the steps of:
receiving, from the first system, the cryptographic key and an Enrolment Key associated
with the first system; and/or
generating, transmitting and/or exchanging a signed digital certificate comprising the cryptographic key and certificate name associated with the first and/or second system;
and preferably wherein the certificate name:
i) is short relative to the cryptographic key; and/or
ii) is arbitrary such that:
the identity of the first system or an operator or owner of the first system cannot be, or is unlikely to be, discerned from the identifier alone; and/or
iii) its generation is random or pseudo-random;
iv) selection of the certificate name is not related to the identity of the system or the cryptographic key.

10. A computer-implemented method according to claim 9 wherein:
i) the cryptographic key and the Enrolment Key are received from the first system as part of, or in conjunction with, a Certificate Signing Request (CSR); and/or
ii) the Enrolment Key is generated by the Platform and/or associated with the first system.

11. A computer-implemented method according to any preceding claim, wherein the policy:
i) comprises one or more tags;
ii) defines rules which are applied to the first and/or second system to permit, restrict or deny the flow of information between the first and second systems based on tags that are applied to the first and second systems;
iii) defines and constrains which systems the first and second systems can communicate with.

12. A computer system comprising computer equipment, the equipment comprising:
memory comprising one or more memory units; and
processing apparatus comprising one or more processing units, wherein the memory stores code arranged to run on the processing apparatus, the code being configured so as when executed on the processing apparatus to perform the method of any preceding claim(s).

13. A system according to claim 12 wherein the system comprises:
a certificate authority (5) arranged to generate a digital certificate comprising:
a public cryptographic key and a certificate name associated with the system,
preferably wherein the certificate authority is a component of a platform arranged in accordance with any of claims 1 to 11 rather than being provided in association with an Operating System of the system or by a supplier of the Operating System.

14. A system according to claim 12 or 13 wherein the system also comprises one or more of:
a portal, preferably a web portal (3);
a relay service;
a discovery service;
and preferably wherein the system is arranged or operative to perform one or more of the following:
generate and/or provide an Enrolment Key to the first and/or second system;
facilitate transmission of the digital certificate to the second system;
provide a Software as a Service facility for public key exchange, validation of the first and second systems;
facilitate direct connection of the first and second systems using their certificate names.

15. A computer program embodied on computer-readable storage and configured so as, when run on one or more processors, to perform the method of any of claims 1 to 11.

## Patentansprüche

1. Computerimplementiertes Verfahren zum Herstellen, Umsetzen und Ermöglichen von Konnektivität zwischen einem ersten System (6) und einem zweiten System (7), wobei jedes System:
bei einer computerbasierten Plattform (1) registriert ist; und
auf der Plattform einem kryptographischen Schlüssel und einem Zertifikatnamen zugeordnet ist;
das Verfahren umfassend:
Definieren und/oder Speichern einer Richtlinie, die Verkehrsflusskriterien definiert, und/oder eines Tags, das eine Klasse, einen Typ oder eine Kategorie eines Computersystems bezeichnet;
Anwenden der Richtlinie und/oder des Tags auf das erste und/oder zweite System; und
Bereitstellen von Erreichbarkeitsinformationen an das erste oder zweite System, um zu erlauben, dass es sich mit dem anderen System verbindet, wenn, und nur wenn, jegliche und alle Regeln, Kriterien und Anforderungen, die der Richtlinie und/oder dem Tag zugeordnet sind, eine Verbindung von oder zwischen dem ersten System und zweiten System (6,7) zulassen.

2. Computerimplementiertes Verfahren nach Anspruch 1 und den folgenden Schritt umfassend:
Anmelden des ersten Systems und des zweiten Systems auf der Plattform in Zusammenhang mit einem entsprechenden Anmeldeschlüssel und optional Konfigurieren des Anmeldeschlüssels, um einen anfänglichen Satz von Tags auf das erste und/oder zweite System anzuwenden.

3. Computerimplementiertes Verfahren nach Anspruch 1 bis 2, wobei:
die Richtlinie und/oder das Tag mindestens einer Regel, einem Kriterium und/oder einer Anforderung zugeordnet ist, die/das definiert, wie und/oder wann die Richtlinie und/oder das Tag auf das erste System und/oder zweite System angewendet wird.

4. Computerimplementiertes Verfahren nach Anspruch 1 bis 3, wobei die Plattform:
i) mindestens teilweise Cloud-basiert ist; und/oder
ii) eine Software-als-Service (SaaS) -Funktion bereitstellt; und/oder
iii) mindestens eine computerbasierte Komponente umfasst, die dazu betriebsfähig und/oder angeordnet ist, die vorhergehenden Ansprüche durchzuführen;
iv) eines oder mehrere aus Folgendem umfasst:
ein Portal, vorzugsweise ein Web-Portal (3); und/oder
eine Zertifikats-Autorität (5); wobei vorzugsweise die Zertifikats-Autorität eine Komponente der Plattform ist und nicht in Zusammenhang mit einem Betriebssystem des ersten oder zweiten Systems oder von einem Lieferanten des Betriebssystems bereitgestellt ist; und/oder
mindestens einen Relais-Service (2); und/oder
eine Schnittstelle; und/oder
eine auf einem Endbenutzersystem installierte Software; und/oder
einen Discovery-Service.

5. Computerimplementiertes Verfahren nach einem der vorhergehenden Ansprüche, wobei die Richtlinie:
i) von einem oder mehreren aus Folgendem beeinflusst oder vorgeschrieben ist: System identität, Endbenutzeridentität, Point-in-Time-Sicherheitsattribute des ersten Systems oder zweiten Systems, Metadaten, Netzwerkstandort, geographischer Standort, Tageszeit; und/oder
ii) nicht durch die Endbenutzeridentität beeinflusst oder vorgeschrieben ist.

6. Computerimplementiertes Verfahren nach Anspruch 5, wobei das Tag:
i) mindestens einer Anforderung oder einem Kriterium zugeordnet ist, die/das definiert und/oder steuert, wann und wie das Tag auf das erste System und/oder zweite System angewendet wird; und/oder
ii) definiert ist durch einen Administrator oder eine Steuerung des ersten und/oder zweiten Systems oder einen/eine dem ersten und/oder zweiten System zugeordnete(n) Administrator oder Steuerung; und/oder
iii) mindestens einer Richtlinie oder Regel zugeordnet ist, die definiert, wie oder wann Daten von dem ersten System und/oder System empfangen oder von diesen versendet werden können; und/oder
iv) als ein Etikett oder eine Kennzeichnung für eine Klasse, einen Typ oder eine Kategorie eines Rechensystems funktioniert.

7. Computerimplementiertes Verfahren nach Anspruch 5 oder 6 und ferner den folgenden Schritt umfassend:
i) Bestimmen, ob mindestens eine Anforderung oder ein Kriterium, die/das dem Tag zugeordnet ist, in Bezug auf das erste und/oder zweite System erfüllt ist; und/oder
ii) Verwenden eines Signals, Ereignisses, Wertes oder einer anderen Metrik, um zu bestimmen, ob mindestens eine Anforderung oder ein Kriterium, die/das dem Tag zugeordnet ist, in Bezug auf das erste und/oder zweite System erfüllt ist.

8. Computerimplementiertes Verfahren nach einem der vorhergehenden Ansprüche und den folgenden Schritt umfassend:
Ermöglichen oder Herstellen eines Kommunikationstunnels zwischen dem ersten System und dem zweiten System;
wobei vorzugsweise die Ermöglichung oder Herstellung:
i) nach der Anmeldung des ersten und/oder des zweiten Systems auf der Plattform und deren jeweiliger Verbindung mit einem Discovery-Service (4) durchgeführt wird;
ii) das Austauschen jeweiliger digitaler Zertifikate zwischen dem ersten und dem zweiten System umfasst, wobei jedes Zertifikat den kryptographischen Schlüssel und eine dem jeweiligen System zugeordnete willkürliche Kennung umfasst.

9. Computerimplementiertes Verfahren nach einem der vorhergehenden Ansprüche, wobei:
eine Zertifikats-Autorität (CA, 5) der Plattform (1) die folgenden Schritte durchführt:
Empfangen, von dem ersten System, des kryptographischen Schlüssels und eines dem ersten System zugeordneten Anmeldeschlüssels; und/oder
Erzeugen, Übertragen und/oder Austauschen eines unterzeichneten digitalen Zertifikats, das den kryptographischen Schlüssel und den dem ersten und/oder zweiten System zugeordneten Zertifikatnamen umfasst; und wobei vorzugsweise der Zertifikatname:
i) relativ zu dem kryptographischen Schlüssel kurz ist; und/oder
ii) willkürlich ist, sodass:
die Identität des ersten Systems oder eines Bedieners oder Eigentümers des ersten Systems nicht oder wahrscheinlich nicht aus der Kennung allein festgestellt werden kann; und/oder
iii) seine Erzeugung zufällig oder pseudozufällig ist;
iv) eine Auswahl des Zertifikatnamens nicht in Bezug zu der Identität des Systems oder des kryptographischen Schlüssels steht.

10. Computerimplementiertes Verfahren nach Anspruch 9, wobei:
i) der kryptographische Schlüssel und der Anmeldeschlüssel von dem ersten System als Teil eines oder in Zusammenhang mit einer Anfrage auf Ausstellung eines Zertifikats (Certificate Signing Request (CSR)) empfangen wird; und/oder
ii) der Anmeldeschlüssel von der Plattform erzeugt wird und/oder dem ersten System zugeordnet ist.

11. Computerimplementiertes Verfahren nach einem der vorhergehenden Ansprüche, wobei die Richtlinie:
i) eines oder mehrere Tags umfasst;
ii) Regeln definiert, die auf das erste und/oder zweite System angewendet werden, um den Fluss von Informationen zwischen dem ersten und dem zweiten System auf Basis von Tags, die auf das erste und das zweite System angewendet werden, zuzulassen, zu beschränken oder zu verwehren;
iii) definiert und eingrenzt, mit welchen Systemen das erste und das zweite System kommunizieren können.

12. Computersystem, umfassend Computerausrüstung, die Ausrüstung umfassend:
einen Speicher, der eine oder mehrere Speichereinheiten umfasst; und
eine Verarbeitungseinrichtung, die eine oder mehrere Verarbeitungseinheiten umfasst, wobei der Speicher Code speichert, der dazu angeordnet ist, auf der Verarbeitungseinrichtung zu laufen, wobei der Code so konfiguriert ist, dass er bei Ausführung auf der Verarbeitungseinrichtung das Verfahren eines vorhergehenden Anspruchs/vorhergehender Ansprüche durchführt.

13. System nach Anspruch 12, wobei das System Folgendes umfasst:
eine Zertifikats-Autorität (5), die dazu angeordnet ist, ein digitales Zertifikat zu erzeugen, umfassend: einen öffentlichen kryptographischen Schlüssel und einen dem System zugeordneten Zertifikatnamen, wobei vorzugsweise die Zertifikats-Autorität eine Komponente einer Plattform ist, die nach einem der Ansprüche 1 bis 11 angeordnet ist, und nicht in Zusammenhang mit einem Betriebssystem des Systems oder von einem Lieferanten des Betriebssystems bereitgestellt ist.

14. System nach Anspruch 12 oder 13, wobei das System auch eines oder mehrere aus Folgendem umfasst:
ein Portal, vorzugsweise ein Web-Portal (3);
einen Relais-Service;
einen Discovery-Service;
und wobei vorzugsweise das System dazu angeordnet oder betriebsfähig ist, eines oder mehrere des Folgenden durchzuführen:
einen Anmeldeschlüssel für das erste und/oder zweite System zu erzeugen und bereitzustellen;
eine Übertragung des digitalen Zertifikats an das zweite System zu ermöglichen;
eine Software-als-Service-Möglichkeit für einen öffentlichen Schlüsselaustausch, Validierung des ersten und des zweiten Systems bereitzustellen;
eine direkte Verbindung des ersten und des zweiten Systems unter Verwendung ihrer Zertifikatnamen zu ermöglichen.

15. Computerprogramm, das auf einem computerlesbaren Speicher enthalten und so konfiguriert ist, dass es, wenn es auf einem oder mehreren Prozessoren läuft, das Verfahren nach einem der Ansprüche 1 bis 11 durchführt.

## Revendications

1. Procédé mis en oeuvre par ordinateur pour établir, imposer ou faciliter la connectivité entre un premier système (6) et un deuxième système (7), dans lequel chaque système :
est enregistré auprès d'une Plateforme basée sur ordinateur (1) ; et
est associé à la Plateforme avec une clé cryptographique et un nom de certificat ;
le procédé comprenant :
la définition et/ou le stockage d'une Politique définissant des critères de flux de trafic et/ou une Balise désignant une classe, un type ou une catégorie de système informatique ;
l'application de la Politique et/ou de la balise au premier et/ou au deuxième système ; et
la mise à disposition d'informations de joignabilité au premier ou au deuxième système pour lui permettre de se connecter à l'autre système si, et uniquement si, l'un quelconque et l'ensemble des règles, critères et exigences associés à la Politique et/ou à la balise permettent la connexion du premier système et du deuxième système (6,7) ou entre ceux-ci.

2. Procédé mis en oeuvre par ordinateur selon la revendication 1, comprenant l'étape :
l'inscription des premier et deuxième systèmes auprès de la Plateforme en association avec une Clé d'inscription respective et, de manière optionnelle, la configuration de la clé d'inscription pour appliquer un ensemble initial de balises au premier et/ou au deuxième système.

3. Procédé mis en oeuvre par ordinateur selon la revendication 1 ou 2, dans lequel :
la Politique et/ou la balise est associée à au moins une règle, critère et/ou exigence qui définit comment et/ou quand la Politique et/ou la balise s'applique au premier système et/ou au deuxième système.

4. Procédé mis en oeuvre par ordinateur selon les revendications 1 à 3, dans lequel la Plateforme :
i) est basée sur le cloud, au moins en partie ; et/ou
ii) met à disposition une fonction Logiciel en tant que Service (SaaS) ; et/ou
iii) comprend au moins un composant basé sur un ordinateur qui est opérationnel et/ou conçu pour accomplir l'une quelconque des revendications précédentes ;
iv) comprend l'un ou plusieurs parmi :
un portail, de préférence un portail web (3) ; et/ou
une autorité de certification (5) ; de préférence dans laquelle l'autorité de certification est un composant de la plateforme plutôt que mise à disposition en association avec un Système d'Exploitation du premier ou du deuxième système ou par un fournisseur du Système d'Exploitation ; et/ou
au moins un service de relais (2) ; et/ou
une interface ; et/ou
un logiciel installé sur le système de l'utilisateur final ; et/ou
un service de découverte.

5. Procédé mis en oeuvre par ordinateur selon l'une quelconque des revendications précédentes, dans lequel la Politique :
i) est influencée ou dictée par l'un ou plusieurs parmi : l'identité du système, l'identité de l'utilisateur final, les attributs de sécurité ponctuels du premier système ou du deuxième système, les métadonnées, la localisation du réseau, la localisation géographique, l'heure de la journée ; et/ou
ii) n'est pas influencée ou dictée par l'identité de l'utilisateur final.

6. Procédé mis en oeuvre par ordinateur selon la revendication 5 dans lequel la balise :
i) est associée à au moins une exigence ou un critère qui définit et/ou contrôle quand ou comment la balise s'applique au premier et/ou au deuxième système ; et/ou
ii) est défini par un administrateur ou un contrôleur du premier et/ou du deuxième système, ou associé à celui-ci ; et/ou
iii) est associé à au moins une Politique ou règle définissant comment ou quand des données peuvent être reçues par ou envoyées depuis le premier et/ou le système ; et/ou
iv) fonctionne comme une étiquette ou un identifiant pour une classe, un type ou une catégorie de système informatique.

7. Procédé mis en oeuvre par ordinateur selon la revendication 5 ou 6 et comprenant en outre l'étape de
i) détermination si au moins une exigence ou un critère associé à la balise est respecté en ce qui concerne le premier et/ou le deuxième système ; et/ou
ii) utilisation d'un signal, d'un événement, d'une valeur ou d'une autre métrique pour déterminer si au moins une exigence ou un critère associé à la balise est respecté en ce qui concerne le premier et/ou le deuxième système.

8. Procédé mis en oeuvre par ordinateur selon l'une quelconque des revendications précédentes et comprenant l'étape de :
facilitation ou établissement d'un tunnel de communication entre le premier système et le deuxième système ;
de préférence, dans lequel la facilitation ou l'établissement :
i) est accompli après l'inscription des premier et/ou deuxième systèmes auprès de la Plateforme et leur connexion respective à un service de découverte (4) ;
ii) comprend l'échange respectif de certificats numériques entre les premier et deuxième systèmes, chaque certificat comprenant la clé cryptographique et un identifiant arbitraire associé au système respectif.

9. Procédé mis en oeuvre par ordinateur selon l'une quelconque des revendications précédentes dans lequel :
une Autorité de Certification (CA, 5) de la Plateforme (1), accomplit les étapes de :
réception, à partir du premier système, de la clé cryptographique et d'une Clé d'inscription associée au premier système ; et/ou
génération, transmission et/ou échange d'un certificat numérique signé comprenant la clé cryptographique et le nom de certificat associé au premier et/ou au deuxième système ;
et de préférence, dans lequel le nom de certificat :
i) est court par rapport à la clé cryptographique ; et/ou
ii) est arbitraire de sorte que :
l'identité du premier système ou d'un opérateur ou propriétaire du premier système ne puisse pas, ou soit peu susceptible d'être discernée à partir de l'identifiant seul ; et/ou
iii) sa génération est aléatoire ou pseudo-aléatoire ;
iv) la sélection du nom de certificat n'est pas liée à l'identité du système ou à la clé cryptographique.

10. Procédé mis en oeuvre par ordinateur selon la revendication 9 dans lequel :
i) la clé cryptographique et la Clé d'inscription sont reçues du premier système dans le cadre, ou en conjonction avec, une Demande de Signature de Certificat (CSR) ; et/ou
ii) la Clé d'inscription est générée par la Plateforme et/ou associée au premier système.

11. Procédé mis en oeuvre par ordinateur selon l'une quelconque des revendications précédentes, dans lequel la politique :
i) comprend une ou plusieurs balises ;
ii) définit des règles qui sont appliquées au premier et/ou au deuxième système pour permettre, restreindre ou interdire le flux d'informations entre les premier et deuxième systèmes en fonction des balises appliquées aux premier et deuxième systèmes ;
iii) définit et contraint les systèmes avec lesquels les premier et deuxième systèmes peuvent communiquer.

12. Système informatique comprenant un équipement informatique, l'équipement comprenant :
une mémoire comprenant une ou plusieurs unités de mémoire ; et
un appareil de traitement comprenant une ou plusieurs unités de traitement, dans lequel la mémoire stocke un code conçu pour s'exécuter sur l'appareil de traitement, le code étant configuré de manière à accomplir, lorsqu'il est effectué sur l'appareil de traitement, le procédé de l'une quelconque des revendication(s) précédentes.

13. Système selon la revendication 12 dans lequel le système comprend :
une autorité de certification (5) conçue pour générer un certificat numérique comprenant :
une clé cryptographique publique et un nom de certificat associé au système, de préférence dans lequel l'autorité de certification est un composant d'une plateforme conçue conformément à l'une quelconque des revendications 1 à 11 plutôt que mise à disposition en association avec un Système d'Exploitation du système ou par un fournisseur du Système d'Exploitation.

14. Système selon la revendication 12 ou 13 dans lequel le système comprend également l'un ou plusieurs parmi :
un portail, de préférence un portail web (3) ;
un service de relais ;
un service de découverte ;
et de préférence dans lequel le système est conçu ou opérationnel pour accomplir l'un ou plusieurs parmi ce qui suit :
générer et/ou mettre à disposition une Clé d'Inscription au premier et/ou au deuxième système ;
faciliter la transmission du certificat numérique au deuxième système ;
mettre à disposition une fonctionnalité de Logiciel en tant que Service pour l'échange de clés publiques, la validation des premier et deuxième systèmes ;
faciliter la connexion directe des premier et deuxième systèmes en utilisant leurs noms de certificats.

15. Programme informatique intégré sur un support lisible par ordinateur et configuré de manière à accomplir, lorsqu'il est exécuté sur un ou plusieurs processeurs, le procédé de l'une quelconque des revendications 1 à 11.
